# EUROPEAN PATENT SPECIFICATION

(11) **EP 2 438 830 B1**
(45) Date of publication and mention of the grant of the patent: **16.07.2014**
(21) Application number: 11182376.1
(22) Date of filing: 04.10.2011
(51) Int. Cl.: A45D 19/14, A45D 19/16

(54) **Treating lice with gaseous compounds in an airtight space**
Behandlung von Läusen mit gasförmigen Verbindungen in einem luftdichten Raum
Traitement anti-poux avec composés gazeux dans un espace hermétique

(30) Priority: 10.10.2010 US 901544
(43) Date of publication of application: 11.04.2012
(73) Proprietor: Novomic Ltd., 79302 Moshav Mashen (IL)
(72) Inventor: Ritterband, Menachem, 74046 Nes Ziona (IL); Shlomi, Yinon, 76360 Rehovot (IL); Levi, Chen, 69702 Tel Aviv (IL)
(74) Representative: Watterson, Peer Marten John

(56) References cited:
- EP-A1- 2 255 778

## Description

### REFERENCE TO CROSS-RELATED APPLICATION

This application claims priority benefits from US Patent Application No. 12/901,544 filed October 10, 2010.

### FIELD OF THE INVENTION

The present invention relates to the field of medical treatment systems, more particularly, to a system and method for treating an infestation of head lice.

### BACKGROUND OF THE INVENTION

Infestation of the human body by lice is an increasingly prevalent social and health problem in many countries in the world. Lice infest hundreds of millions of people each year. Lice are very small insects, about 2-3mm in length. They deposit eggs either on a hair or fabric fiber and attach them firmly with a cement-like excretion.

The life cycle of lice comprises an egg stage, three nymphal stages, and an adult stage, and takes about one month. A female louse lays approximately 100 eggs, which are glued to hairs of the host. The eggs generally hatch in about six to ten days, depending on temperature. The nymphs, (the larval stage in insect development), and adults suck blood, causing disturbance (itching, also known as pruritus) and secondary infection. The empty shells remaining after the nymphs emerge from the eggs look like white grains of sand.

Lice, being insects, use tracheae for respiration. Tracheae are a system of internal tubes (invaginations of the cuticle) penetrating the insect's body, through which air diffuses or is being pumped directly to the body tissues, Within body cells, chemical respiration takes place in the mitochondria, where ATP is produced under oxygen consumption.

The common treatment methods against lice involve liquids or lotions.

An apparatus and process for killing human and animal vermin, which discloses treatment of lice within a gas-tight garment by using a volatile liquid, specifically methyl-formate, that is spread on a pad inside the garment and evaporates inside the garment, is described in U.S. patent No. 2,033,357 of Riker et al, patented 1936.

A method and device for eradicating lice and nits form an infested area, particularly the scalp of a human being, comprises a plastic or rubber cap for covering the head of a human being, and means for filling the cap with an inner gas, such as carbon dioxide from a pressurized-gas cartridge, in order to suffocate the lice and the nits enclosed by the cap, is described in European patent application No. 86630160.9, publication No. EP0221004, of Scolnik et al. filed October 30, 1986.

A formulation for controlling human lice, which discloses pediculicidal formulations comprising a spinosyn, or a physiologically acceptable derivative or salt thereof, and a physiologically acceptable carrier, and methods of controlling lice infestations in a human with these formulations are provided in International patent application No. PCT/US1999/013925, publication No. WO/2000/001347, of Snyder, filed June 21, 1999.

A pediculicide composition, in particular, a composition comprising a sesquiterpene alcohol and a suitable carrier, is described in International patent application No. PCT/AU2006/001720, publication No. WO/2007/056813, of Found, filed November 17, 2006.

A method and composition for controlling lice on an organism is described in International patent application No. PCT/NL2000/000196, publication No. WO/2000/057704, of Kussendrager et al. filed March 23, 2000.

All of these applications are incorporated by reference for all purposes as if fully set forth herein.

Although the various breeds of human lice are related, each of them has specific characteristics with regard to habitat and feeding. For example, head lice are small hard-shelled ectoparasites which cling to hair shafts while feeding, mating and laying eggs. The louse must remain on the head or it will die within a short period of time. Head lice proliferate at an incredible rate. A louse is ready to mate and reproduce within 10 hours after hatching. Under ideal conditions, a female louse may produce up to 300 eggs in its lifetime. Ideal conditions include an adequate food supply, environmental temperature from about 28°C to about 32°C, and relative humidity of about 70% to about 90%.

The louse's hard chitinous exoskeleton serves as protection from external elements. Lice eggs (or ova) are similarly protected by a chitinous sheath surrounding the eggs and attached to the hair shaft. Although lice may be affected by the use of an insecticide, the eggs often remain resistant to attack. Thus, present art optimum treatment of a lice infestation includes both a pediculicide, which kills the adult lice, and an ovicide, which interrupts the development of the eggs.

Treatment for eliminating head lice traditionally included home remedies such as smearing mayonnaise, olive oil, hair pomade, or some other heavily viscous material about an infested scalp coupled with rigorous combing of the hair and meticulous removal of adult lice, nymphs, and nits. Though these home remedies do not kill head lice, the prevailing thought is that the viscosity of the material makes it hard for head lice to roam about the scalp, making for easy removal. Such home remedies are usually ineffective at controlling head lice due to the ability of the lice to revive rapidly once these materials are removed.

More effective treatments for eliminating head lice involve massaging the infested scalp with over-the-counter (OTC) topical creams containing active insecticides. Because of their potential toxicity to the human host, the use of these topical formulas is regulated by the FDA. Over-the-counter insecticides typically have pyrethrins or permethrin as active ingredients

Biologically active agents have been used for some time in attempts to control lice. For example, lindane (gammabenzene hexachloride), organophosphates (malathion), natural pyrethrins, and synthetic compounds known as pyrethroids (such as permethrin) have been used as pediculicides in lice treatment formulations. These agents however, have drawbacks. Lindane has a poor safety profile, and lice have developed resistance to it. Natural pyrethrin requires frequent follow-up treatments because it provides only short term residual action. Synthetic pyrethroids, although more effective against lice than natural pediculicides, are often more toxic to the subject being treated.

Strains of head lice have been identified worldwide which are resistant to all currently available topical treatments. Possible neural damage to the human host prevents raising the insecticide levels above the current threshold in an attempt to combat these newer treatment resistant head lice.

A system for treating lice with gaseous compounds in an airtight space is described in European patent application No. 09163262.0 publication No. EP2255778, of Ritterband, Menachem and Shlomi, Yinon, which is incorporated by reference for all purposes as if fully set forth herein.

Figure la of the prior art illustrates a system for treating lice and nits **1**, on a head **10** of a patient, according to European patent application No. 09163262.0.

A container **14** is connected on both ends to connecting tubes **13**. In this configuration, the container **14** contains active agent **15** in a gas state. The flow of the active agent **15** is achieved by releasing vaporizing and circulating gas **12** from within a vaporizing and circulating gas source **11**. The releasing is enabled by opening a valve, for example by a gas source handle **11a**.

Figure 1b of the prior art shows a container **14**, according to the European patent application No. 09163262.0.

The container **14** contains an immersed material **16**, which is a sponge, immersed with active agent **15**. In this configuration, an active agent **15**, of acetic acid type is inserted into the container **14** and then evaporates.

This method of storage of the active agent **15** is insufficiently effective.

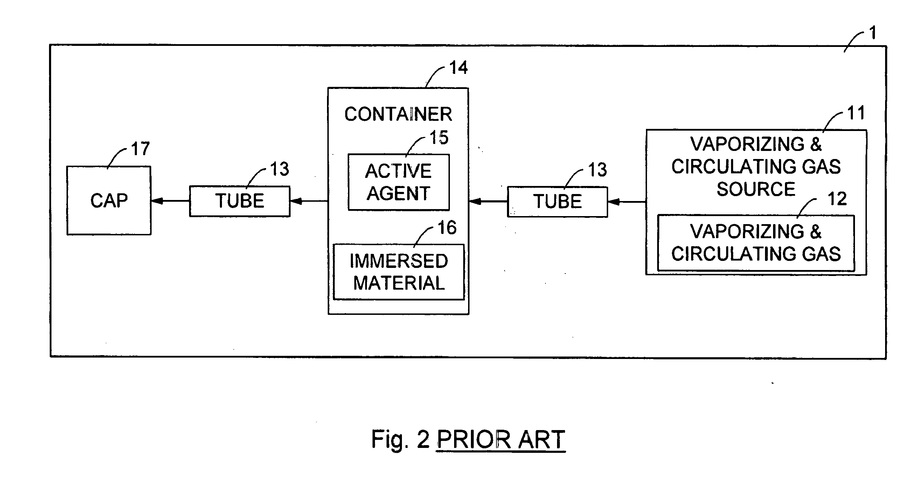

Figure 2 of the prior art is a schematic block diagram of a system for treating lice and nits 1, according to the European patent application No. 09163262.0.

A vaporizing and circulating gas source **11** contains a vaporizing and circulating gas **12**, which during activation flows through a connecting tube **13** to a container **14**. Container **14** contains active agent **15** and immersed material **16**, such as a sponge.

The vaporizing and circulating gas **12** vaporizes the active agent **15** and causes it to flow through a connecting tube **13** to a cap **17** for the purpose of performing the treatment of lice and nits.

None of the prior art provides a sufficiently effective solution, and there is therefore a need for a system and a method for treating an infestation of head lice.

### SUMMARY OF THE INVENTION

The present invention teaches an effective solution for an infestation of head lice, including a system and method of use, which eliminates both the lice and their eggs by means of effective insertion of gas near the roots of the patient's hair, with the gas including toxic material or materials, and enabling a combined attack also including suffocating gases.

The system for treating lice and nits on a head of a patient includes a cap for defining an airtight space around the head and a container for storing active agent or a mixture of active agents for treating lice. In addition, a vaporizing and circulating gas source is also provided. Specifically, the mixture of active agents is selected so that it causes irreversible damage to at least one essential mechanism of said lice.

Experiments have shown that the carboxylic acids most effective for use according to the present invention are formic acid and acetic acid.

Formic acid, CH₂O₂, is the simplest carboxylic acid.

Acetic acid, C₂H₄O₂, also known as an organic acid, is a simple carboxylic acid too, which is a water-soluble component of vinegar, and has been used, in liquid, as a folk remedy which dissolves the cement of lice eggs.

According to the teaching of the present invention there is provided a system for treating lice and nits (1) on a head of a patient according to claim 1.

According to the teaching of the present invention there is provided a method for treating lice and nits on a head of a patient according to claim 14.

Additional objects and advantages of the invention will be set forth in part in the description which follows and, in part, will be obvious from the description, or may be learned by practice of the invention,

### BRIEF DESCRIPTION OF THE DRAWINGS

The invention is herein described, by way of example only, with reference to the accompanying drawings, wherein:

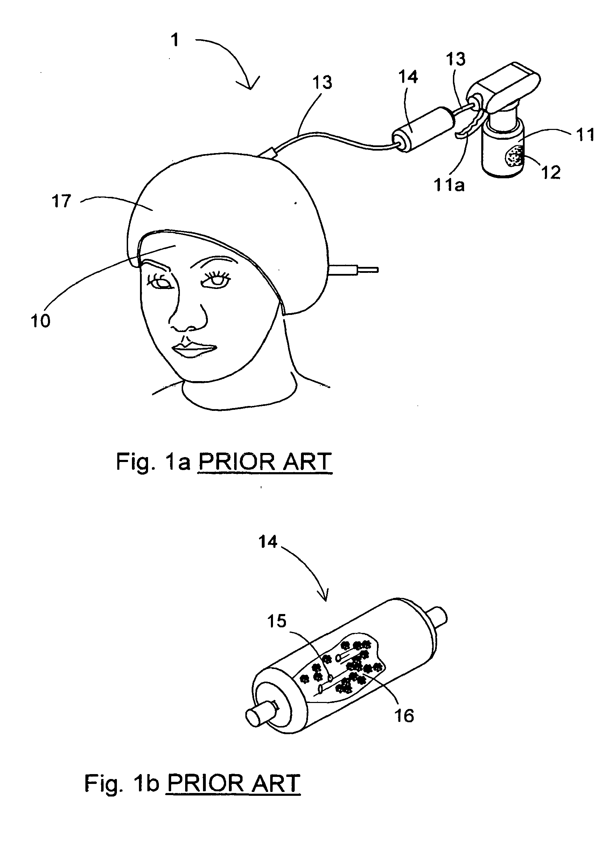

Figure 1a of the prior art illustrates a system for treating lice and nits, on a head of a patient, according to European patent application No. 09163262.0.
Figure 1b of the prior art shows a container, according to the European patent application No. 09163262.0.
Figure 2 of the prior art is a schematic block diagram of a system for treating lice and nits, according to the European patent application No. 09163262.0.
Figure 3a illustrates a cap of a system for treating lice and nits, not according to the present invention and useful for understanding the present invention, upon which a section plane a-a is marked.
Figure 3b is a cross sectional view a-a illustration of an injection tube, of the cap of the system for treating lice and nits, according to the Figure 3a.
Figure 4a is a side view schematic illustrations of a container of the system for treating lice and nits, according to the Figures 3a and 3b.
Figure 4b is an isometric view schematic illustration of an active agent container of the system for treating lice and nits, according to the Figure 3a.
Figure 4c is a top view schematic illustration of an active agent container of the system for treating lice and nits, according to the Figures 4a and 4b, upon which a section plane b-b is marked.
Figure 4d is a cross sectional view b-b illustration of an active agent container of the system for treating lice and nits, according to the Figure 4c.
Figure 4e is an isometric view schematic illustration of filter compartment and a filter, of the container, of the system for treating lice and nits 1, according to the Figures 4a, 4b, 4c, and 4d.
Figure 5 is an isometric view schematic illustration of a vaporizing and circulating gas source, a container, a connector and a connecting tube, of the system for treating lice and nits, according the Figures 3 and 4.
Figure 6a is a flow charts that schematically illustrating of a method of treating lice and nits on a head of a patient, according to some embodiments of the present invention.
Figure 6b is a flow charts that schematically illustrating of a method for connecting the container to the vaporizing and circulating gas source, according to the present invention.
Figure 7 is a schematic block diagram of a system for treating lice and nits, according to the present invention.
Figure 8 is an exploded isometric view schematic illustration of a capsule and a safety-catch, according to the present invention.
Figure 9 is an isometric view schematic illustration of a connecting tube, according to the present invention.
Figure 10 is an isometric view schematic illustration of an adapter and an adapter seal, according to the present invention.
Figure 11 a is a cross sectional isometric view c-c illustration of an external cylinder of the system for treating lice and nits, according to the present invention.
Figure 11b is a cross sectional isometric view c-c illustration of a container cylinder of the system for treating lice and nits, according to the present invention.
Figure 11c is a cross sectional isometric view c-c illustration of an internal cylinder, of the system for treating lice and nits, according to the present invention.
Figure 11d is a cross sectional isometric view c-c illustration of a first carrier of the system for treating lice and nits, according to the present invention.
Figure 11e is a cross sectional isometric view c-c illustration of a second carrier of the system for treating lice and nits, according to the present invention.
Figure 12 is a cross sectional isometric view c-c illustration of a safety-catch of the system for treating lice and nits, according to the present invention.
Figure 13 is a cross sectional isometric view c-c illustration of an adapter seal of the system for treating lice and nits, according to the present invention.
Figure 14a is a side view schematic illustrations of a connecting tube, a capsule, and an adapter, of the system for treating lice and nits, according to the present invention, upon which a section plane c-c is marked.
Figure 14b is a cross sectional view c-c illustration of a connecting tube, a capsule, a safety-catch, and an adapter, of the system for treating lice and nits, according to the present invention.
Figure 15a is a side view schematic illustrations of a capsule, and an adapter, of the system for treating lice and nits, engaged with each other, according to the present invention, upon which a section plane d-d is marked.
Figure 15b is a cross sectional view d-d illustration of a capsule, and an adapter, of the system for treating lice and nits, engaged with each other, according to the present invention.
Figure 15c is a front view schematic illustration of, a capsule, and an adapter, of the system for treating lice and nits, engaged with each other, according to the present invention, upon which a section plane e-e is marked.
Figure 15d is a cross sectional view e-e illustration of a capsule, and an adapter, of the system for treating lice and nits, engaged with each other, according to the present invention.
Figure 16a is a top view schematic illustration of an adapter, of the system for treating lice and nits, according to the present invention.
Figure 16b is a front view schematic illustration of an adapter of the system for treating lice and nits, according to the present invention, upon which a section planes g-g and f-f are marked.
Figure 16c is a bottom view schematic illustration of an adapter, of the system for treating lice and nits, according to the present invention.
Figure 16d is a cross sectional view f-f illustration of the system for treating lice and nits, according to the present invention.
Figure 16e is a top isometric view schematic illustration of an adapter, of the system for treating lice and nits, according to the present invention.
Figure 16f is a cross sectional view g-g illustration of the system for treating lice and nits.
Figure 17a is an isometric view schematic illustration of an external cylinder and of an adapter of the system for treating lice and nits, according to the present invention, upon which a section plane h-h is marked.
Figure 17b is a cross sectional view h-h illustration of the external cylinder and of the adapter of the system for treating lice and nits, according to the present invention.
Figure 17c is an isometric view schematic illustration of an external cylinder and of an adapter of the system for treating lice and nits, according to the present invention, upon which a section plane i-i is marked.
Figure 17d is a cross sectional view i-i illustration of the external cylinder and of the adapter of the system for treating lice and nits according to the present invention.
Figure 18a is an isometric view schematic illustration of a capsule onto which is mounted a safety-catch, of the system for treating lice and nits, according to the present invention.
Figure 18b is a cross sectional view c-c illustration of a capsule, and a safety-catch of the system for treating lice and nits, according to the present invention.
Figure 18c is a cross sectional view d-d illustration of a capsule, and an adapter, of the system for treating lice and nits, engaged with each other, according to the present invention.
Figure 19 is an isometric view schematic illustration of a container, of the system for treating lice and nits, according to the present invention.
Figure 20 is an isometric view schematic illustration of a porous particle.

### DETAILED DESCRIPTION OF EMBODIMENTS

The present invention is of a system and a method for treating lice and nits on a head of a patient.

The principles and operation of a system and a method for treating lice and nits on a head of a patient, according to the present invention may be better understood with reference to the drawings and the accompanying description.

Before explaining at least one embodiment of the invention in detail, it is to be understood that the invention is not limited in its application to the details of construction and the arrangement of the components set forth in the following description or illustrated in the drawings.

Unless otherwise defined, all technical and scientific terms used herein have the same meaning as commonly understood by one of ordinary skill in the art to which this invention belongs. The materials, dimensions, methods, and examples provided herein are illustrative only and are not intended to be limiting.

The following list is a legend of the numbering of the application illustrations:
- 1: system for treating lice and nits
- 10: head
- 11: vaporizing and circulating gas source
- 11a: gas source handle
- 12: vaporizing and circulating gas
- 13: connecting tube
- 13a: connector
- 14: container
- 14a: container main wall
- 14aa: container main wall end
- 14b: container end wall
- 14c: fluid passage
- 14d: lid
- 14e: sealing disc
- 14g: o-ring seal
- 14i: filter compartment
- 14ia: filter compartment first disc
- 14ib: filter compartment second disc
- 14ic: filter compartment disc hole
- 14j: first carrier
- 14ja: first carrier cylinder
- 14jb: first carrier disc
- 14jc: first carrier length
- 14jd: first carrier cylinder exterior diameter
- 14je: first carrier interior diameter
- 14jh: first carrier ring disc exterior diameter
- 14k: second carrier
- 14ka: second carrier cylinder
- 14kb: second carrier disc
- 14kc: second carrier length
- 14kd: second carrier cylinder exterior diameter
- 14ke: second carrier interior diameter
- 14kf: second carrier ring diameter
- 14kg: second carrier ring
- 14kh: second carrier ring disc exterior diameter
- 14l: filter
- 14m: container cylinder
- 14na: container main wall first thickness
- 14nb: container main wall second thickness
- 14nc: container main wall third thickness
- 14oa: container first outer ring
- 14oad: container first outer ring diameter
- 14ob: container second outer ring
- 14obd: container second outer ring diameter
- 14oc: container third outer ring
- 14ocd: container third outer ring diameter
- 14od: container interior ring
- 14pa: container first stair depth
- 14pb: container second stair depth
- 14qa: container first internal diameter
- 14qb: container second internal diameter
- 14ra: container first internal stair
- 14rb: container second internal stair
- 14rc: container third internal stair
- 14sa: container first end
- 14sb: container second end
- 15: active agent
- 16: immersed material
- 16a: porous particle
- 16aa: porous poriferous
- 16ab: poriferous opening
- 16ac: poriferous opening diameter
- 16ad: porous particle size
- 16ac: porous particle surface
- 16p: surface point
- 17: cap (airtight)
- 17a: distributor
- 17b: injection tube
- 17c: interior side of the cap
- 17d: injection tube stitch
- 17e: injection tube edge
- 17f: flow opening
- 18: adapter
- 18a: adapter seal
- 18aa: adapter seal body
- 18ab: adapter seal niches
- 18ac: adapter seal hole
- 18b: adapter piercer
- 18c: adapter tube
- 18d: adapter outer cylinder
- 18da: adapter outer cylinder inner face
- 18e: adapter base
- 18f: adapter track
- 18g: adapter track stopper
- 18h: adapter inner cylinder segment
- 18i: adapter base opening segment
- 18j: adapter inner space
- 18k: adapter track inner cylinder segment gap
- 18l: adapter track free end
- 18m: adapter inner stair
- 20: capsule
- 20a: external cylinder
- 20aa: external cylinder wall
- 20ab: external cylinder window
- 20ac: gripping means
- 20ad: arrow mark
- 20ae: external cylinder first end
- 20af: external cylinder end wall
- 20ag: external cylinder tube
- 20ah: external cylinder piercer
- 20ai: external cylinder tube internal length
- 20aj: external cylinder second end
- 20ak: external cylinder outer clip
- 20a1: external cylinder wall internal diameter
- 20b: internal cylinder
- 20ba: internal cylinder wall
- 20bb: internal cylinder hook
- 20bba: internal cylinder hook head
- 20bc: internal cylinder slot
- 20bd: internal cylinder outer ring
- 20be: internal cylinder base
- 20bf: internal cylinder base ring
- 20bg: internal cylinder wall internal diameter
- 20bh: internal cylinder wall exterior diameter
- 20bi: internal cylinder base ring exterior diameter
- 20bj: internal cylinder outer ring outer diameter
- 20bk: internal cylinder first end
- 20bl: internal cylinder second end
- 20bm: internal cylinder outer_stair
- 20c: sealing ring
- 20l: (external cylinder) linear_movement_(direction)
- 20r: external cylinder rotational direction
- 21: safety-catch
- 21a: safety-catch handle
- 21b: safety-catch stopper arm
- 21 c: safety-catch stopper arm width
- 21d: external cylinder movement range
- Alfa: adapter track segment angle
- 81 ― 86: a method of treating lice and nits on a head of patient stages

Note: when the association of a reference number to the present invention needs to be distinguished, the reference number associated to the system not according to the present invention and useful for understanding the present invention will be marked with a single apostrophe, and the reference number associated to the present invention will be marked with a double apostrophe, for example: system for treating lice and nits 1', (in accordance with the system not according to the present invention and useful for understanding the present invention), and system for treating lice and nits 1", (in accordance with the present invention).

The disclosed invention describes a system and method for treating lice on a patient's head. The invention utilizes a cap for defining the space around the treated hair, and an airtight sealing of the space around the treated hair, to apply an active agent for treating lice. Reducing the volume that is treated allows using a small amount of active agent, such that in case of releasing the active agent outside the cap, the patient faces no danger due to the strong dilution of the active agent. Keeping the active agent compressed in a container enables a rapid delivery of the active agent into the airtight space.

This specification is not intended in any way to limit the present invention to any specific method of applying pressure to the material in order to deliver it in gas form.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

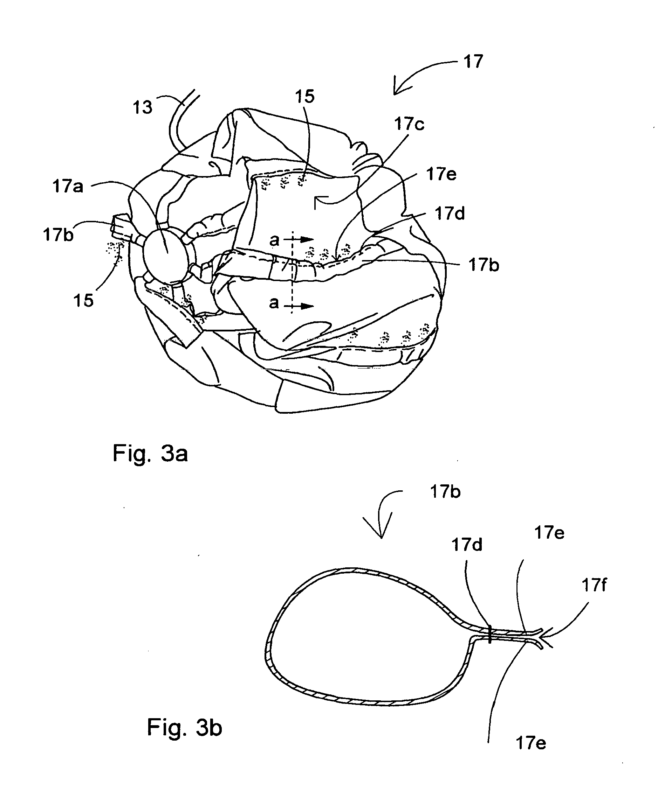

Figure 3a illustrates a cap **17** of a system for treating lice and nits **1',** (not fully shown in the present drawing), not according to the present invention, upon which a section plane a-a is marked.

Cap **17** is shown in the present illustration from its inside, with its central part pulled and diverted toward the left side of the illustration, and being equipped with a distributor **17a.** During treatment, the distributor **17a** receives a supply of active agent **15** at a higher pressure than that of the environment.

The active agent **15** comes through the connecting tube **13** and the distributor **17a** disperses its circulation to several injection tubes **17b.** The injection tubes **17b** are attached to the interior side of the cap **17c.** An injection tube **17b** includes openings through which the active agent **15** flows.

Figure 3b is a cross sectional view a-a illustration of an injection tube **17b,** of the cap **17** of the system for treating lice and nits **1',** not according to the present invention.

The injection tube **17b** can be composed of a thin material, relative to its lateral section, for example fabric, folded double lengthwise. Along the injection tube edges **17e** are injection tube stitches **17d,** which connect these edges however do not seal them, and comprise a flow opening **17f.**

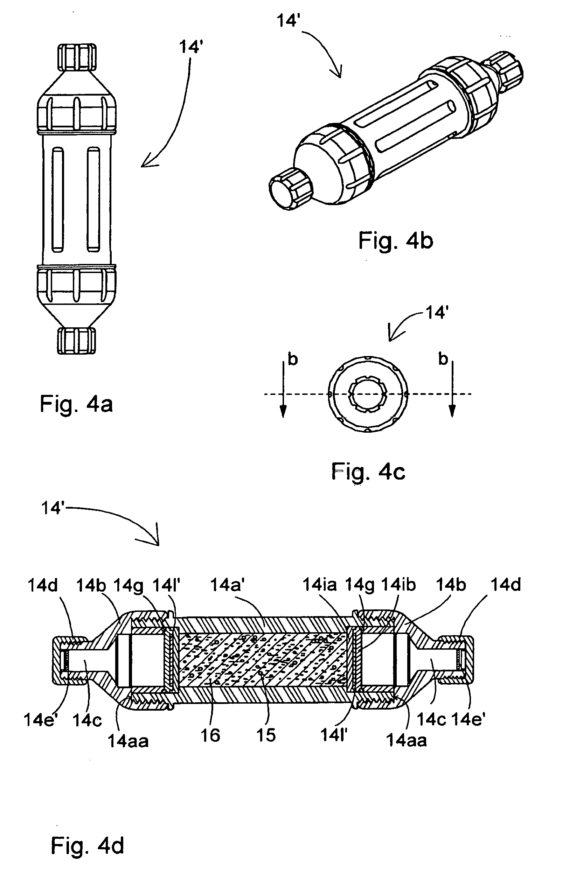

Figure 4a is a side view schematic illustrations of a container **14'** of the system for treating lice and nits **1',** not according to the present invention.

Figure 4b is an isometric view schematic illustration of an active agent container **14'** of the system for treating lice and nits **1',** not according to the present invention.

Figure 4c is a top view schematic illustration of an active agent container **14'** of the system for treating lice and nits **1',** not according to the present invention, upon which a section plane b-b is marked.

Figure 4d is a cross sectional view b-b illustration of an active agent container **14'** of the system for treating lice and nits **1',** not according to the present invention.

The present illustration shows the container **14',** in storage state, when it is inactive, and contains immersed material **16** and active agent **15** in a liquid state, absorbed within the immersed material **16.** The immersed material **16** can be a sponge in a single lump, several smaller lumps, or a large number of small crumb-size pieces, spherical or of another shape, including amorphous pieces, or porous particles. The pieces of the immersed material **16** improve the evaporation.

The container **14'** can be designated for single-time use.

A particularly effective form of the active agent **15** for this specific purpose is acetic acid (CH₃COOH).

A sufficient quantity of acetic acid for one treatment, stored in container **14',** can be in the range of **1** to 5 cubic milliliters.

During circulation of the vaporizing and circulating gas source 11, (not shown in the present illustration), the liquid part of the active agent **15,** if there is part of it in a liquid state, evaporates, and only its vapors emerge and flow from the container **14'.**

The container **14'** includes a container main wall **14a',** whose shape can be as of a cylindrical tube wall, with a circular section, having at each of its ends, the container main wall end **14aa,** a container end wall **14b,** the shape of each can include a conical segment, which tapers and becomes narrower in the outward direction, having a circular section, which extends into a segment resembling a cylindrical tube wall, with a circular section, creating at it center a fluid passage **14c.**

One fluid passage **14c** serves as an inlet, while the other serves as an outlet.

In storage state, the container **14'** is closed on both ends by lids **14d** which are removed from their places prior to use. Near the end of each fluid passage **14c,** a sealing disc **14e'** can be placed to prevent any leakage of active agent **15** during storage.

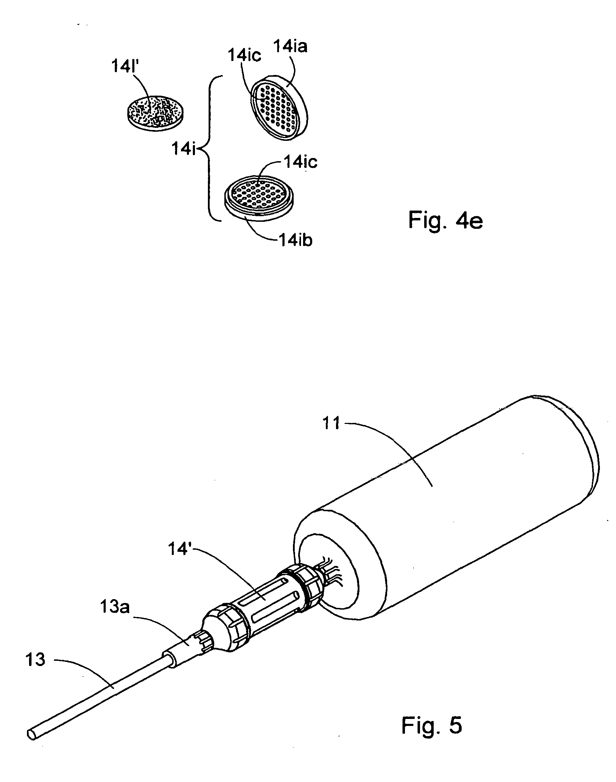

The sealing discs **14e'** are broken during preparation for use, for example during assembly of a connector **13a,** (not shown in the present illustration, shown in Figure 5).

Furthermore, the container **14'** can include two o-ring seals **14g** and two filters **141'.**

Figure 4e is an isometric view schematic illustration of filter compartment **14i** and a filter **141',** of the container **14',** (not shown in the present drawing), of the system for treating lice and nits 1', not according to the present invention.

The present illustration shows one possible configuration for installing the filter **141'** in its place, including a filter compartment **14i** composed of two parts, a filter compartment first disc **14ia,** and a filter compartment second disc 14ib each of which has filter compartment disc holes **14ic,** with the filter **141'** disposed between them.

Figure 5 is an isometric view schematic illustration of a vaporizing and circulating gas source **11,** a container **14',** a connector **13a** and a connecting tube **13,** of the system for treating lice and nits **1',** not according the present invention.

The present illustration presents a vaporizing and circulating gas source **11** which is connected directly to the container **14'.** Likewise, the connecting tube **13** is also connected to the container **14',** a connection made, in the case of the present illustration, by means of connector **13a.**

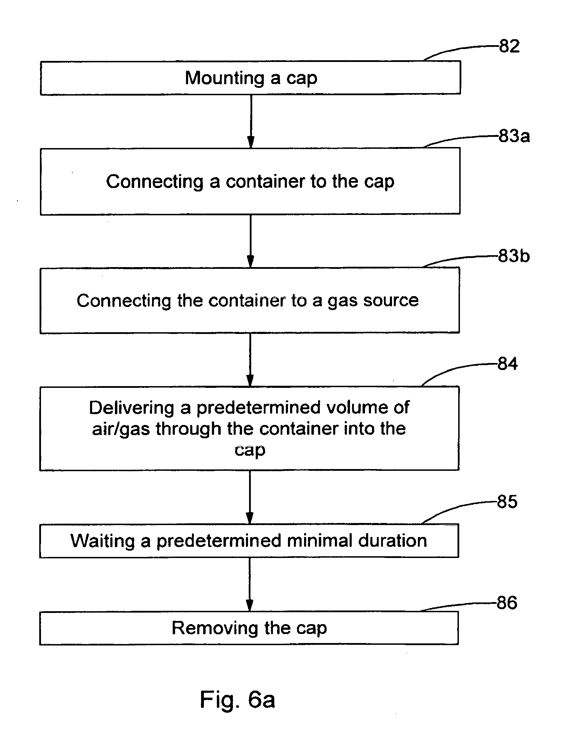

Figure 6a is a flow chart that schematically illustrating of a method of treating lice and nits on a head **10** of a patient, according to some embodiments of the present invention, the method including the stages of:
(a) mounting a cap **17** over the head of the patient, the cap **17** includes an inlet tube **13,** a distributor **17a,** and injection tubes **17b,** (stage 82);
(b) connecting a container **14'** to the inlet tube **13,** the container **14'** includes an active agent **15** in liquid state absorbed in an immersed material **16,** (stage 83a);
(c) connecting the container **14'** to a vaporizing and circulating gas source **11,** (stage 83b);
(d) delivering vaporizing and circulating gas **12** through the container **14',** and evaporating the active agent **15,** the vaporizing and circulating gas **12** may be air or another suitable gas, or a mixture of suitable gases, (stage 84);
(e) waiting at least a predetermined minimal duration, (stage 85); and
(f) removing the cap **17** from the head **10** after the predetermined minimal duration, (stage 86).

Note: the order of performing some of the stages can differ from what is shown in the flow charts of the present illustration, particularly the order of stage 83a and stage 83b.

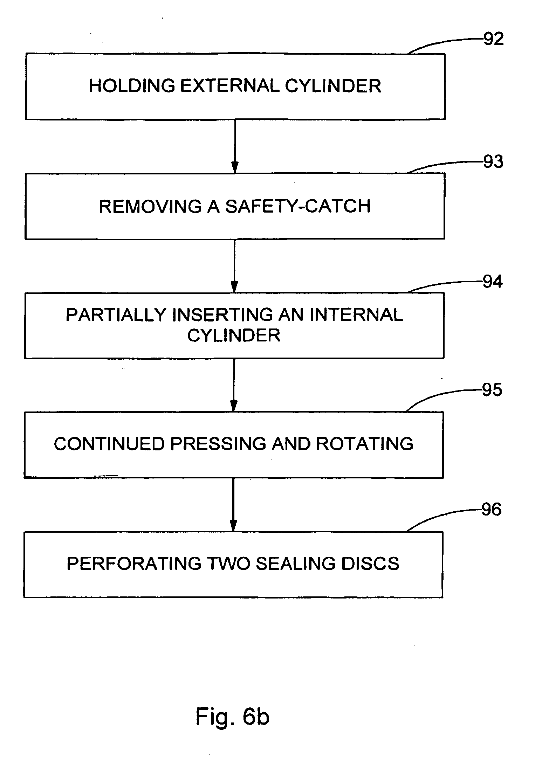

Figure 6b is a flow charts that schematically illustrating a method for connecting the container **14'** to the vaporizing and circulating gas source **11,** which are sub-stages of stage 83b, according to the present invention, the method including the sub-stages of:
(ci) holding external cylinder **20a** of capsule **20,** with the capsule **20** containing the container **14",** which contains active agent **15** and porous particles **16a,** (sub-stage 92);
(cii) removing a safety-catch **21** from the capsule **20,** (sub-stage 93);
(ciii) partially inserting an internal cylinder **20b,** of the capsule **20** into an adapter **18,** which includes an adapter tube **18c,** (sub-stage 94);
(civ) after a performing a linear movement of the external cylinder (20a), the external cylinder second end (20aj) is halted within the adapter **18,** and continuing pressing of external cylinder **20a** in linear movement toward the adapter **18** and rotating it while adapter tracks **18f** apply forces to the external cylinder outer clips **20ak** until the linear and rotational movement between external cylinder **20a** and adapter **18** are stopped and they are locked together by force of friction, as a result of the contact generated between external cylinder outer clip **20ak** and adapter track stoppers **18g,** (sub-stage 95); and
(cv) in the course of the linear movement of the external cylinder 20a with regard to the internal cylinder **20b,** perforating two sealing discs **14e"** to enable flow from and through container **14"** (sub-stage 96).

It has been found that for effective treatment, active agent **15** can be used at a time range of 5 seconds to 5 minutes, with the option for recurrent treatment in intervals of two to ten days. The quantity per treatment is of active agent **15,** which in liquid state in storage takes up a volume of 0.5 ― 5.0 cubic milliliters.

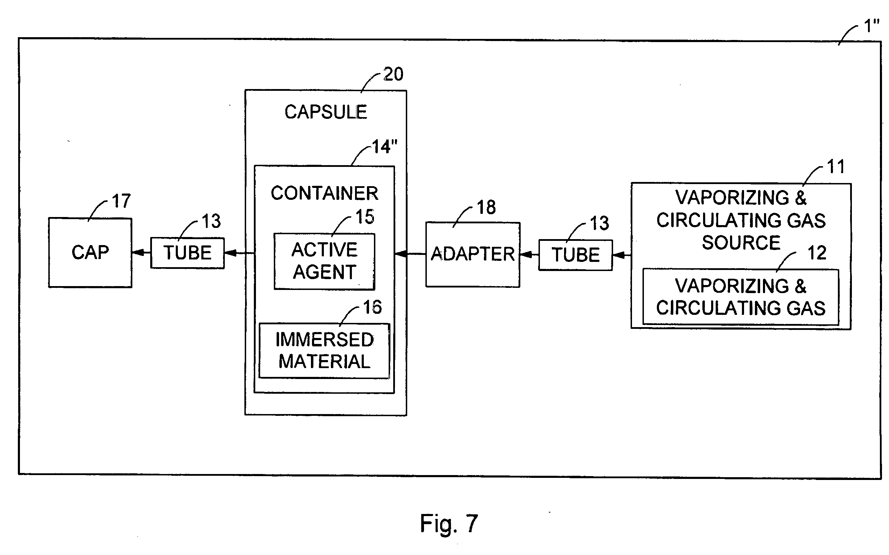

Figure 7 is a schematic block diagram of a system for treating lice and nits I", according to the present invention.

The container **14"** is within a capsule **20.** Prior to activation, for the purpose of performing treatment, capsule 20 is partially inserted into adapter **18,** thus perforating seals and enabling flow of vaporizing and circulating gas **12** from the vaporizing and circulating gas source **11** through the adapter **18** to the container **14".** Adapter **18** can be connected to circulating gas source **11** directly or by means of connecting tube **13.**

The vaporizing and circulating gas **12** vaporizes active agent **15** and circulates it for the purpose of treating lice, through an additional connecting tube **13** to the cap 17.

Container **14"** can also contain an immersed material **16,** such as porous particles.

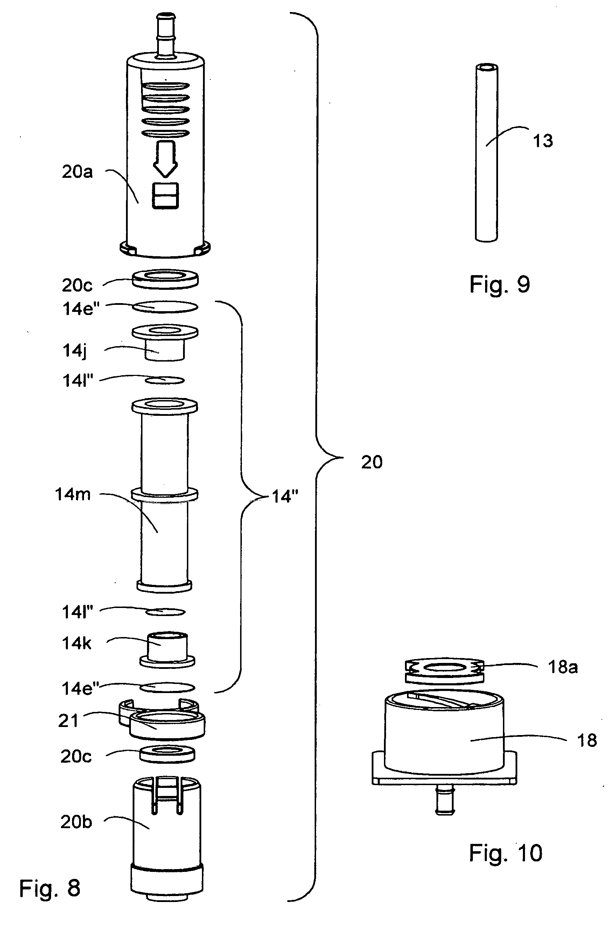

Figure 8 is an exploded isometric view schematic illustration of a capsule **20** and a safety-catch **21,** according to the present invention.

Capsule **20** includes the parts shown in the present illustration, the structure of each of which and its function, as well as the manner in which they compose capsule 20, and the manner in which they move and function will be described in further figures and their accompanying description.

The typical parts composing the capsule **20** are: an external cylinder **20a,** an internal cylinder **20b,** two sealing rings **20c,** and a container **14".** Container **14"** includes a first carrier **14j,** and a second carrier **14k,** two sealing discs **14e",** and two filters **141".**

The safety-catch **21,** when it is engaged with capsule **20,** prevents movement between the external cylinder **20a** and the internal cylinder **20b** as will be further described in detail.

This list of parts is in no way limiting the present invention, and a capsule **20** including additional parts, less parts, and/or different parts is possible according to the present invention.

Figure 9 is an isometric view schematic illustration of a connecting tube **13,** according to the embodiments of the present invention.

Connecting tube **13** serves as a tube enabling flow of active agent **15** and of vaporizing and circulating gas **12** from the container **14"** to the cap **17.**

The connecting tube **13** can also serve as a tube enabling flow of vaporizing and circulating gas **12** from the vaporizing and circulating gas source **11** to container **14".**

The option of using connecting tube **13** or connecting tubes **13** is in no way limiting the present invention, and connections can be made of the container **14"** to the cap **17,** and of the vaporizing and circulating gas source **11** to container **14",** without mediation of connecting tubes **13.**

(The vaporizing and circulating gas source **11,** vaporizing and circulating gas **12,** container **14",** active agent **15,** and cap **17,** are not shown in the present illustration).

Its dimensions, such as internal and external diameter, and the material composing connecting tube **13** and its features such as rigidity, flexibility, plasticity, and impenetrability, resistibility to environmental conditions in storage and during suitable use are adapted for practical purposes.

Figure 10 is an isometric view schematic illustration of an adapter **18** and an adapter seal **18a,** according to the present invention.

Adapter **18** enables connecting capsule **20,** (not shown in the present drawing), to the vaporizing and circulating gas source **11,** (not shown in the present drawing), directly, or by mediation of connecting tube **13,** (not shown in the present drawing).

In addition, adapter **18** also assists in breaking seals of capsule **20,** (not shown in the present drawing), in order to enable flow through it and from it, as will be further described.

Adapter **seal 18a** is designated to prevent leakage after the connection of capsule **20** to the adapter **18,** in the area of the connection, however without disrupting flow between the parts.

Its external shape, from a top view of the adapter seal **18a,** as well as its dimensions, conform to its designated location within adapter **18.**

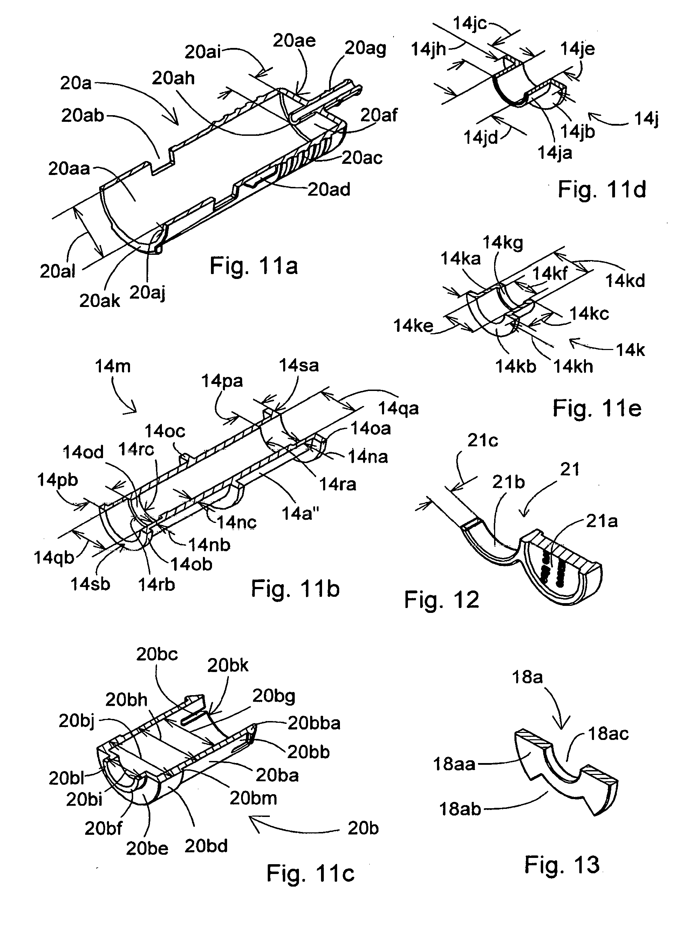

Figure 11 **a** is a cross sectional isometric view c-c illustration of an external cylinder **20a** of the system for treating lice and nits **1",** according to the present invention.

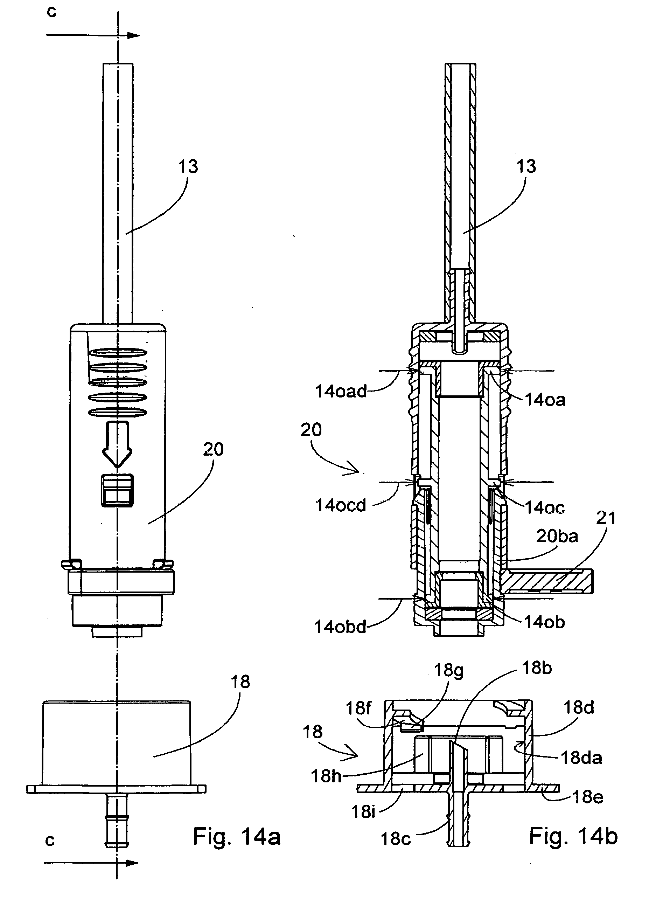

The cross section plane c-c can be found in Figure **14a****.**

The external cylinder 20a also serves for holding by hand and transmitting forces during connection of capsule **20** to an adapter **18,** (both not fully shown in the present drawing), and for the purpose of breaking both sealing discs **14e",** (not shown in the present drawing).

The external cylinder **20a** has an external cylinder **wall 20aa,** having two external cylinder windows 20ab designated to receive the internal cylinder hook heads **20bba,** (not shown in the present drawings), during assembly of capsule **20,** and to enable them a limited range of movement.

The external side of the external cylinder **20a** has a gripping means **20ac,** such as rigs or roughness, and an arrow mark **20ad** indicating the direction of activating force when performing the connection to the adapter **18,** (not shown in the present drawing).

The gripping means 20ac enables firm grip and marks the desired location for holding.

In the external cylinder first end **20ae** there is an external cylinder end wall **20af,** through which an external cylinder tube **20ag** passes, and its end contained within the external cylinder **20a** is an external cylinder piercer **20ah.** The external cylinder tube 20ag has an external cylinder tube internal length **20ai.**

The external cylinder tube **20ag** enables connection of capsule **20** to a connecting tube **13,** (both not fully shown in the present drawing).

In the external cylinder second end **20aj** there are two external cylinder outer clips **20ak,** (only one of which is shown in the present illustration), and which when connected in rotational movement of the capsule **20,** (not shown in the present drawing), to the adapter **18**, (not shown in the present drawing), is subject to force applied by adapter track **18f,** (not shown in the present drawing), causing movement and perforation, as will be further described.

The external cylinder outer clips **20ak,** and the adapter tracks **18f** have a shape in a range of segments of spiral coils of identical pitch.

In other configurations according to the present invention, there can be a different number of external cylinder outer clips **20ak,**

The external cylinder **20a** has an external cylinder wall internal diameter **20al.**

Figure 11b is a cross sectional isometric view c-c illustration of a container cylinder **14m** of the system for treating lice and nits **1",** according to the present invention.

The cross section plan c-c can be found in Figure 14a.

The container cylinder **14m** has a container main wall **14a"** with a container first end **14sa** and a container second end **14sb.** The container main wall **14a"** can have several wall thicknesses, such as a container main wall first thickness **14na,** in a segment starting with container first end **14sa** and continuing to a depth of a container first stair depth **14pa,** a container main wall second thickness **14nb,** in a segment starting with container second end **14sb** and continuing to a depth of a container second stair depth **14pb,** a location in which a container interior ring **14od** is disposed, and a container main wall third thickness **14nc,** which is thicker than both of the aforementioned thicknesses, and is along the remainder of the container main wall.

The container interior ring **14od** serves as a stair that provides a rest for the first carrier **14j** (not shown in the present drawing) and enables convenient sealing with the sealing ring **20c** (not shown in the present drawing) and adhesion of the sealing disc **14e"** (not shown in the present drawing).

The container first internal stair **14ra** serves as a support for one filter **141",** and the container second internal stair **14rb** serves as a support for another filter **141",** (both filters **141"** not shown in the present drawing).

As a result, the container cylinder **14m,** in the configuration shown in the present illustration, includes three internal stairs, a container first internal stair **14ra,** a container second internal stair **14rb**, and a container third internal stair **14rc.**

Likewise, the container main wall **14a"** bears outer rings, three in the configuration shown in the present illustration, a container first outer ring **14oa** at the container first end **14sa,** a container second outer ring **14ob** at the container second end **14sb,** and a container third outer ring **14oc** in between.

Each one of the container outer rings **14oa, 14ob,** and 1**4oc** has a container outer ring diameter marked in Figure 14b, conforming to the dimensions of other elements composing capsule **20.**

In the segment between the container first end **14sa** and the container first internal stair **14ra,** the length of which is the container first stair depth **14pa,** container main wall **14a"** has a container first internal diameter **14qa.**

In the segment between the containers second end **14sb** and the container second internal stair **14rb,** the length of which is the container second stair depth **14pb,** container main wall **14a"** has a container second internal diameter **14qb.**

The container first outer ring **14oa** serves as a support for first carrier **14j** and for good grip of one filter **141"** between them, (both not shown in the present drawing).

Similarly, the container second outer ring **14ob** serves as a support for the second carrier **14k** and the filter **141"** between them, (both not shown in the present drawing).

The container third outer ring **14oe** helps to fix the container cylinder **14m** inside the external cylinder **20a,** (not shown in the present drawing), and furthermore enables the internal cylinder **20b,** (not shown in the present drawing), to push the container cylinder **14m** in order to cause the puncturing of a seal, as will be further detailed.

Figure 11c is a cross sectional isometric view c-c illustration of an internal cylinder **20b,** of the system for treating lice and nits **1",** according to the present invention.

The cross section plane c-c can be found in Figure **14a****.**

The internal cylinder **20b,** has an internal cylinder wall **20ba** having two ends, an internal cylinder first end **20bk** and an internal cylinder second end **20b1.**

From the internal cylinder first end **20bk** exits along the internal cylinder wall **20ba** four internal cylinder slots **20bc**, two of which are shown in the present illustration, emerge from the internal cylinder first end **20bk** along the internal cylinder wall **20ba.**

In other configurations, there can be more or less internal cylinder slots **20bc.**

Between two adjacent internal cylinder slots **20bc,** there is an elastic internal cylinder hook **20bb.** This elasticity enables, during the assembly of capsule **20,** (not shown in the present drawing), to dispose each internal cylinder hook head **20bba** within an external cylinder window **20ab,** (not shown in the present drawing), thus limiting the range of movement between the internal cylinder **20b** and the external cylinder **20a,** (not shown in the present drawing).

On the internal cylinder wall **20ba,** at its more distant end from the internal cylinder first end **20bk,** there is an internal cylinder outer ring **20bd,** which is attached to an internal cylinder base **20be,** which is attached to an internal cylinder base ring **20bf.**

The internal cylinder base **20be** presses on the adapter seal **18a,** (not shown in the present drawing), after the connection of capsule **20** to the adapter **18,** (both not shown in the present drawing), thus achieving a good seal between them.

Near the closer end of the internal cylinder **20b** to the internal cylinder base **20be** there is an internal cylinder outer stair **20bm,** which prevents movement of container **14"** into the external cylinder **20a,** when a safety-catch **21,** (both not shown in the present drawing) is assembled to the container cylinder **14m,** thus preventing the puncturing of seals.

Note: use of terms such as: located, attached, disposed, etc., are not in any way limiting to a specific combination of components, and according to the present invention there can be a system including various elements made of a single continuous material, which can be manufactured in a process suitable for designing its shape and attaining additional features, such as casting or machining.

For the dimensions of internal cylinder **20b** to conform to other elements composing capsule **20,** the following specific dimensions are particularly significant, and are indicated in the present illustration: the internal cylinder wall internal diameter **20bg,** the internal cylinder wall exterior diameter **20bh,** the internal cylinder base ring exterior diameter **20bi,** and the internal cylinder outer ring outer diameter **20bj.**

When in the description and in the claims sections of the present patent application reference is made to the diameters of two components mounted one within the other, using the term substantially, or the like, such as in the following phrasing: "a first element having a diameter substantially equal to the diameter of a second element", the reference is to dimensions which are very close in size, however maintain a small gap between both diameters, several orders of magnitude smaller than the dimensions of the diameters. The dimensions of the diameters and the possible tolerance are in these cases as is acceptable in engineering design to ensure that there will be longitudinal movement between both of the components in question, without excessive friction, however at the same time without excessive lateral freedom of movement.

This reference also applies to length dimensions and angular dimensions of segments of components.

Figure 11d is a cross sectional isometric view c-c illustration of a first carrier **14j** of the system for treating lice and nits **1",** according to the present invention.

The cross section plane c-c can be found in Figure **14a****.**

First carrier **14j** has a spatial form including a first carrier cylinder **14ja,** one of whose ends has a first carrier disc **14jb.** The first carrier cylinder **14ja** and the first carrier disc **14jb** have a first carrier interior diameter **14je,** and the first carrier cylinder **14ja** has a first carrier cylinder exterior diameter **14jd.** The first carrier **14j** has a first carrier length **14jc,**

The first carrier **14j** serves as a support for filter **141"** and to a sealing disc **14e",** (both not shown in the present drawing), disposed at two opposite ends of it.

The dimension of the first carrier length **14jc** is sufficiently long in order to prevent puncturing of sealing disc **14e"** by the external cylinder piercer **20ah,** (not shown in the present drawing), even when there is relative movement between them.

The dimensions of the first carrier cylinder exterior diameter **14jd** and the container first internal diameter **14qa** are substantially equal.

The first carrier **14j** has a first carrier ring disc exterior diameter **14jh.**

Figure 11e is a cross sectional isometric view c-c illustration of a second carrier **14k** of the system for treating lice and nits **1",** according to the present invention.

The cross section plane c-c can be found in Figure 14a.

Second carrier **14k** has a spatial form including a second carrier cylinder **14ka** one of whose ends has a second carrier disc **14kb,** while the opposite end has a second carrier ring **14kg** having second carrier ring diameter **14kf.**

According to another variation the second carrier **14k** does not include a second carrier ring **14kg** and it is identical in shape to the first carrier **14j** (not shown in the present drawing), with the single difference being in the dimensions of the second carrier ring disc exterior diameter **14kh,** which conform to internal cylinder wall internal diameter **20bg,** and the first carrier ring disc exterior diameter **14jh,** which conforms to the external cylinder wall internal diameter 20al.

The second carrier cylinder **14ka** and the second carrier disc **14kb** have a second carrier interior diameter **14ke,** and the second carrier cylinder **14ka** has a second carrier cylinder exterior diameter **14kd,** The second carrier **14k** has a second carrier length **14kc.**

The second carrier **14k** serve s as a support for a **141"** and a sealing disc **14e",** (both not shown in the present drawing), both disposed at its opposite ends.

The dimension of the second carrier length **14kc** is long enough to prevent puncturing of sealing disc **14e"** by the adapter piercer **18b,** (both not shown in the present drawing), even when there is relative movement between them.

The dimensions of the second carrier cylinder exterior diameter **14kd** and the container second internal diameter **14qb** are substantially equal.

Figure 12 is a cross sectional isometric view c-c illustration of a safety-catch **21** of the system for treating lice and nits **1"**, according to the present invention.

The cross section plane c-c can be found in Figure 14a.

The safety-catch **21** includes a safety-catch handle **21a** and two safety-catch stopper arms **21b,** one of which is shown in the present illustration.

The safety-catch stopper arms **21b** is retractable, thus enabling manual removal of the safety-catch 21 by pulling the safety-catch handle **21a**. The safety-catch stopper arms **21b** have a safety-catch stopper arm width **21c,** which conforms to the distance of movement the safety-catch **21** covers between the external cylinder **20a** and the internal cylinder **20b,** (both not shown in the present drawing).

Figure 13 is a cross sectional isometric view c-c illustration of an adapter **seal 18a** of the system for treating lice and nits 1", according to the present invention.

The cross section plane c-c can be found in Figure 14a.

The adapter seal **18a** has an adapter seal body **18aa,** the perimeter of which has two adapter seal niches **18ab,** one of which is shown in the present illustration, whose shape, from a top view, is conform with the shape of the adapter inner cylinder segment **18h,** (not shown in the present drawing), also from a top view, and at its center, from a top view, is an adapter seal hole **18ac.**

Figure 14a is a side view schematic illustrations of a connecting tube **13,** a capsule **20,** and an adapter **18,** of the system for treating lice and nits **1",** according to the present invention, upon which a section plane c-c is marked.

The connecting tube **13** shown in the present illustration is designated to connect the capsule **20** to a cap **17,** (not shown in the present drawing), and can be made of a flexible material.

The state shown in the present illustration is inactive, in which the capsule **20** and the adapter **18** are separated from each other.

Figure 14b is a cross sectional view c-c illustration of a connecting tube **13,** a capsule **20,** a safety-catch **21** and an adapter **18,** of the system for treating lice and nits 1", according to the present invention,

The container first outer ring **14oa** has a container first outer ring diameter **14oad,** the container second outer ring **14ob** has a container second outer ring diameter **14obd,** and the container third outer ring **14oc** has a container third outer ring diameter **14ocd.** The container first outer ring diameter **14oad,** the container second outer ring diameter **14obd** are substantially equal in size to the external cylinder wall internal diameter **20al,** (not shown in the present drawing), and the container third outer ring diameter **14ocd** is substantially equal in size to the internal cylinder wall internal diameter **20bg.**

The safety-catch **21** is shown mounted on the internal cylinder wall **20ba.**

The adapter **18** has adapter base **18e,** this base can be a wall of the vaporizing and circulating gas source **11,** (not shown in the present drawing), or a separate wall, with the adapter **18** and the vaporizing and circulating gas source **11** being connected to each other by means of a connecting tube **13,** in this case the shape from a top view of the adapter base **18e** can be circular.

The adapter base **18e** is connected to an adapter outer cylinder **18d** and an adapter inner cylinder segment **18h,** and between them, on part of the adapter base **18e,** there are adapter base opening segments **18i.**

The adapter base opening segments **18i** are designated to facilitate the manufacturing of the adapter tracks **18f** with the adapter track stoppers **18g.** This applies to various methods of manufacturing, including casting and machining.

An adapter tube **18c** passes through adapter base **18e** and its end which is internal relative to adapter **18** is pointed and serves as an adapter piercer **18b.**

When the adapter **18** and the vaporizing and circulating gas source **11** are connected to each other directly and without mediation of a connecting tube **13,** there is no need for the part of the adapter tube **18c,** which protrudes beneath the adapter base **18e** in the orientation shown in the present illustration.

The adapter outer cylinder inner face **18da** is connected to two adapter tracks **18f,** at the end of each of which is an adapter track stopper **18g.**

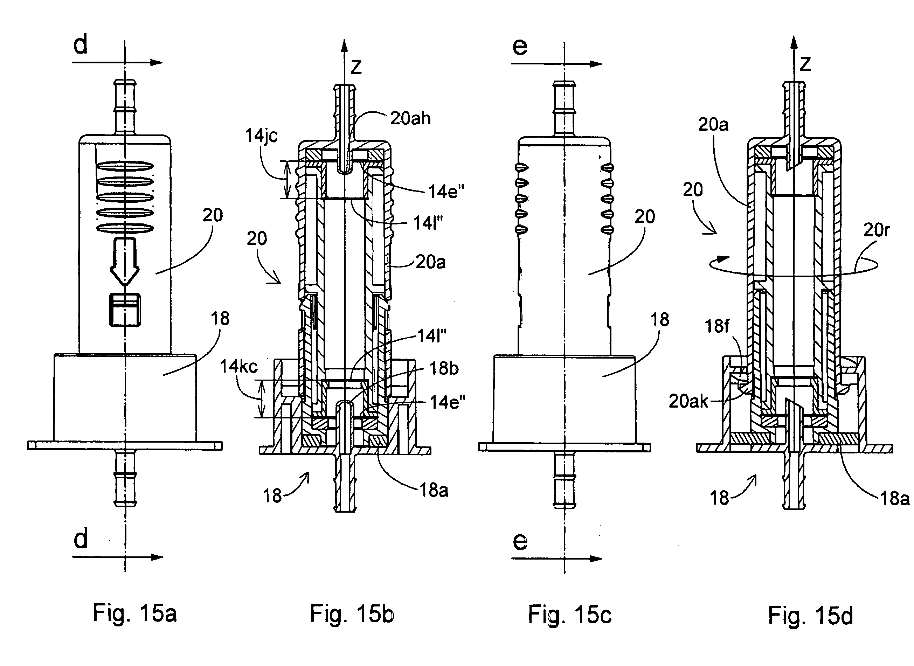

Figure 15a is a side view schematic illustrations of a capsule **20,** and an adapter **18,** of the system for treating lice and nits **1",** engaged with each other, according to the present invention, upon which a section plane d-d is marked.

Figure 15b is a cross sectional view d-d illustration of a capsule **20,** and an adapter **18,** of the system for treating lice and nits **1",** engaged with each other, according to the present invention.

During movement of the external cylinder **20a** in the direction ―Z relative to the adapter **18,** the external cylinder piercer **20ah** pierces a puncture in one sealing disc **14e",** and the adapter piercer **18b** pierces a puncture in the second sealing disc **14e".**

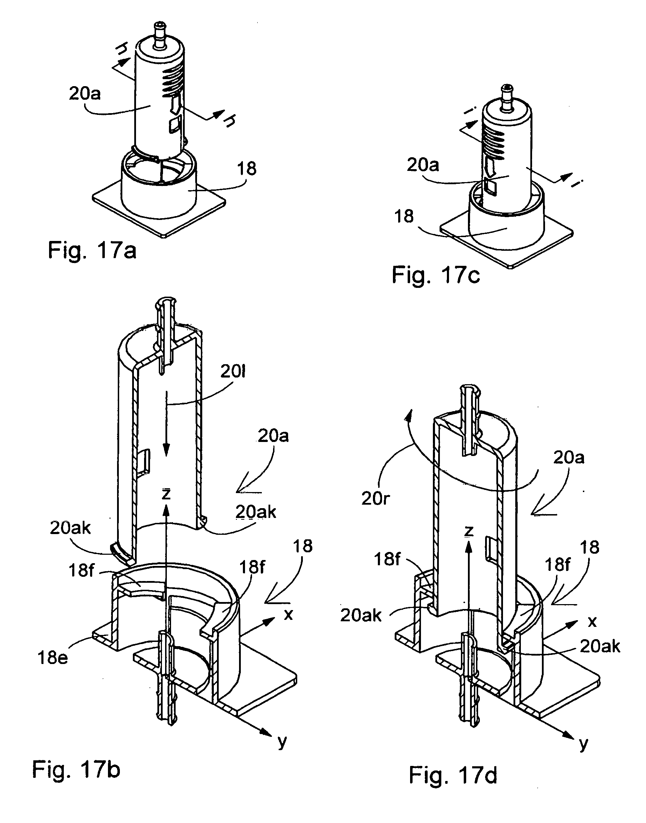

Axis Z is one axis of a Cartesian X, Y, and Z axis system defined in Figure 17b.

These punctures enable flow. However, the external cylinder piercer **20ah** and the adapter piercer **18b** do not pierce both filters **141",** thanks to a combination of length dimensions, also including the dimensions of the first carrier length **14jc** and the second carrier length **14kc,**

The present illustration also shows the adapter seal **18a.**

Figure 15c is a front view schematic illustration of a capsule **20,** and an adapter **18,** of the system for treating lice and nits **1",** engaged with each other, according to the present invention, upon which a section plane e-e is marked.

Figure 15d is a cross sectional view e-e illustration of a capsule **20,** and an adapter **18,** of the system for treating lice and nits **1",** engaged with each other, according to the present invention.

The movement of the external cylinder **20a** in the direction -Z relative to the adapter **18** is achieved thanks to manual pushing of the external cylinder **20a** into the adapter **18,** followed by its rotation toward an external cylinder rotational direction **20r** of the external cylinder **20a** relative to the adapter **18** around coordinate Z.

Each external cylinder outer clip **20ak** is forced by an adapter track **18f** to keep applying force in the direction -Z, and thanks to the forces applied between the various elements, create a lock of the external cylinder **20a** within the adapter **18.**

The present illustration also shows the adapter seal **18a.**

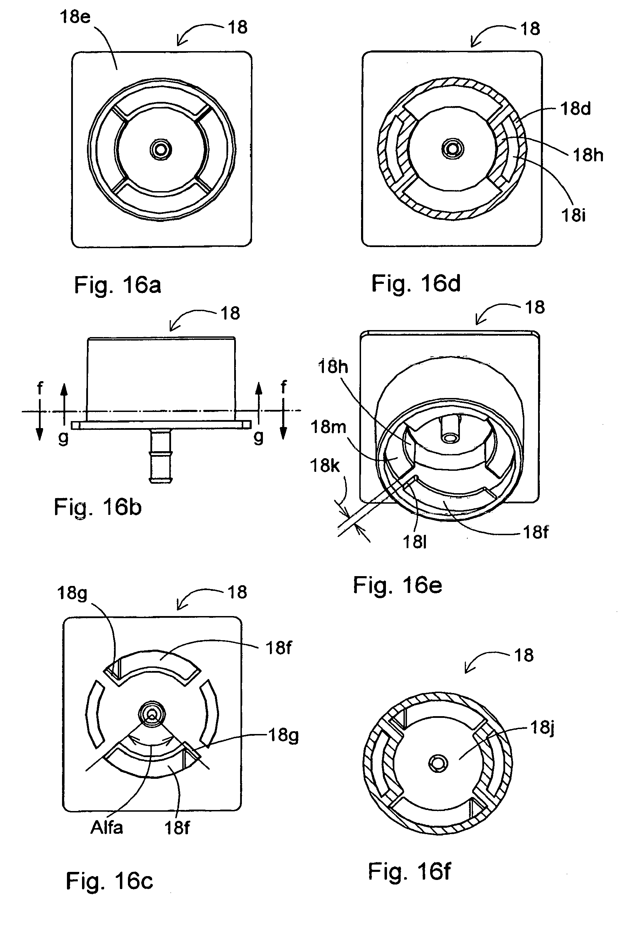

Figure 16a is a top view schematic illustration of an adapter **18,** of the system for treating lice and nits **1",** according to the present invention.

The adapter base **18e** has a rectangular shape, however the present invention is in no way limited strictly to this shape, and other shapes are also possible.

Figure 16b is a front view schematic illustration of an adapter **18** of the system for treating lice and nits **1",** according to the present invention, upon which a section planes g-g and f-f are marked.

Figure 16c is a bottom view schematic illustration of an adapter **18,** of the system for treating lice and nits **1",** according to the present invention.

At the end of each one of the adapter tracks **18f** there is an adapter track stopper **18g.** Each adapter track **18f** has the shape of a segment of a spiral coil, which from a top view has an adapter track segment angle **Alfa,** a good value of which is of the order of magnitude of 90 degrees.

Figure 16d is a cross sectional view f-f illustration of the system for treating lice and nits **1",** according to the present invention.

Between the adapter outer cylinder **18d** and the adapter inner cylinder segment **18h,** there is an adapter base opening segment **18i.**

Figure 16e is a top isometric view schematic illustration of an adapter **18,** of the system for treating lice and nits **1",** according to the present invention.

Above each adapter inner cylinder segment **18h** there is an adapter inner stair **18m.** The present illustration shows the spiral nature of adapter track **18f.** Between adapter track free end **181** and adapter inner stair **18m,** there is an adapter track inner cylinder segment gap **18k**, which is suitable for passing through in rotational movement of an external cylinder outer clip **20ak**, (not shown in the present drawing).

Figure 16f is a cross sectional view g-g illustration of the system for treating lice and nits **1"**.

An adapter inner space **18j** enables inserting an end of a capsule **20**, (not shown in the present drawing), into the adapter **18**, for the purpose of their connection.

Figure 17a is an isometric view schematic illustration of an external cylinder **20a** and of an adapter **18** of the system for treating lice and nits **1"**, according to the present invention, upon which a section plane h-h is marked.

The external cylinder **20a** and the adapter **18** are not engaged with each other, and are shown here in a smaller size than shown in the majority of illustrations of the present patent application, for purposes of convenience.

Figure 17b is a cross sectional view h-h illustration of the external cylinder **20a** and of the adapter **18** of the system for treating lice and nits 1", according to the present invention.

For the purpose of better understanding the relative movements between the external cylinder **20a** and the adapter **18** when they are engaged with each other, a Cartesian X, Y, and Z axis system is defined, attached to the adapter **18**. Its Z axis serves as the adapter's symmetry axis, and plane X-Y is placed on the bottom side of the adapter base **18e.**

The external cylinder 20a is shown in the present illustration rotated at 90 degrees around axis Z relative to the original section plane.

Prior to the engagement of the external cylinder **20a** with the adapter **18**, the external cylinder 20a is above the adapter **18**, according to the defined axis system, in such an orientation that external cylinder outer clip **20ak** is not above an adapter track **18f.** The engagement process starts with moving the capsule **20,** which for the purpose of simplicity is presented here by only the external cylinder **20a,** in movement shown here as external cylinder linear movement **201** in a direction along axis Z, and in a direction opposite to its direction.

Figure 17c is an isometric view schematic illustration of an external cylinder **20a** and of an adapter **18** of the system for treating lice and nits **1",** according to the present invention, upon which a section plane i-i is marked.

The external cylinder **20a** and the adapter **18** are engaged with each other and shown here as smaller than they are shown in the majority of illustrations of the present illustration, for purposes of convenience.

Figure 17d is a cross sectional view i-i illustration of the external cylinder **20a** and of the adapter **18** of the system for treating lice and nits **1",** according to the present invention.

After the external cylinder **20a** has been inserted sufficiently deep into the adapter **18** it is manually rotated in the direction marked by the external cylinder rotational direction **20r.** In this state, the adapter tracks **18f** force the external cylinder outer clip **20ak** to maintain the linear movement of the external cylinder **20a** until it is locked.

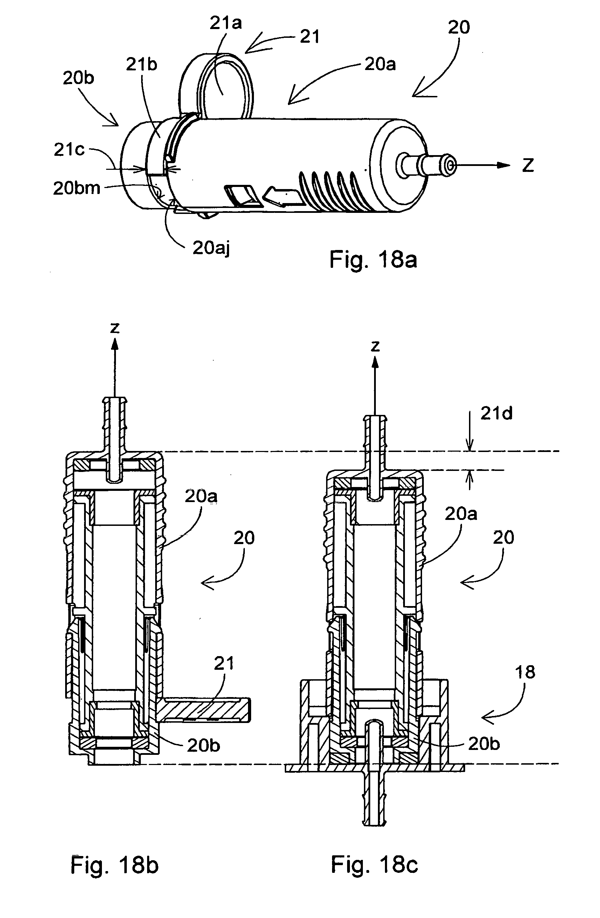

Figure 18a is an isometric view schematic illustration of a capsule **20,** onto which is mounted a safety-catch **21,** of the system for treating lice and nits **1",** according to the present invention.

The safety-catch **21** is shown in the present illustration as engaged with capsule **20.** The two safety-catch stopper arms **21b** are in the gap between the internal cylinder outer stair **20bm** and the external cylinder second end **20aj** whose size substantially equals the safety-catch stopper arm width **21c,** thus preventing relative closing movement along axis Z between the external cylinder **20a** and the internal cylinder **20b,**

Figure **18b** is a cross sectional view c-c illustration of a capsule 20, and a safety-catch **21,** of the system for treating lice and nits **1",** according to the present invention.

The safety-catch **21** prevents relative closing movement along axis Z between the external cylinder **20a** and the internal cylinder **20b**.

Figure 18c is a cross sectional view d-d illustration of a capsule **20** and an adapter **18,** of the system for treating lice and nits 1", engaged with each other, according to the present invention.

After withdrawal of the safety-catch **21,** (not shown in the present drawing), from capsule **20** and pressing capsule **20** toward the adapter **18** in the direction -Z, closing movement is achieved in this direction of the external cylinder **20a** relative to the internal cylinder **20b.** This movement cannot be larger than the value of an external cylinder movement range **21d.**

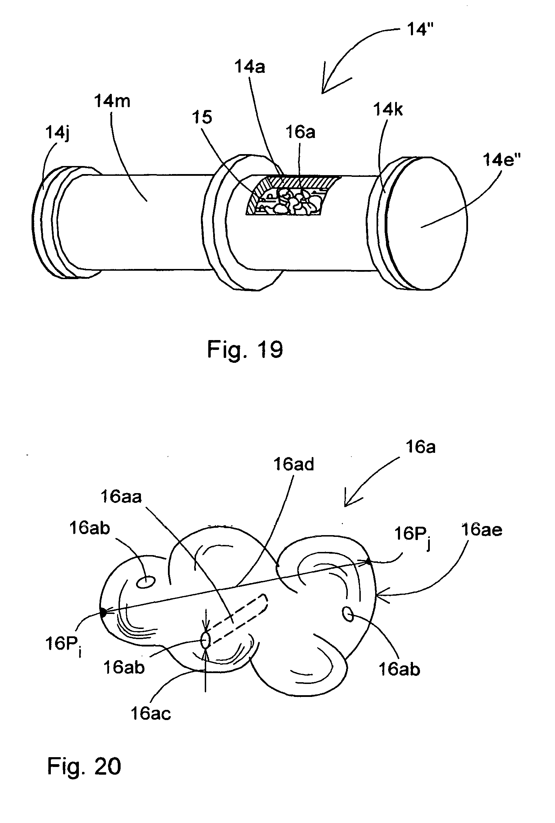

Figure 19 is an isometric view schematic illustration of a container **14",** of the system for treating lice and nits **1",** according to the present invention.

The container **14"** includes container cylinder **14m,** a first carrier **14j,** a second carrier 14k, and two sealing discs **14e",** and for as long as a sealing disc **14e"** has not been punctured, the container **14"** contains active agent **15.**

Furthermore, according to an embodiment of the present invention, it contains immersed material **16,** which in the present illustration includes a plurality of porous particles **16a.** Strictly for the purpose of showing the active agent **15** and the porous particles **16a** in the present illustration, part of the container main wall **14a"** has been removed.

The plurality of porous particles **16a** enables preserving the active agent **15** in liquid state during storage, and enables fast vaporization of the active agent **15** when vaporizing and circulating gas **12,** (not shown in the present illustration), flows through the container **14".**

The vaporization rate is dependent on several parameters also including: surface areas, the type of liquid, (the active agent **15),** the flow speed of the vaporizing and circulating gas **12** and the temperature of the active agent **15.**

According to the present invention, different kinds of vaporizing and circulating gas **12** can be used, also including Butane, Freon, and Nitrous Oxide.

Adding organic and non-organic solvents materials, such as acetone or ethanol, to vaporizing and circulating gas **12** has been found to expedite the vaporizing rate of the active agent **15.**

Figure 20 is an isometric view schematic illustration of a porous particle **16a.**

The porous particle 16a is an inert component, miniscule relative to the dimensions of the container **14,** having porous poriferous **16aa.** Porous poriferous **16aa** has at least one poriferous opening **16ab,** having a poriferous opening diameter **16ac** in the order of magnitude of single to several tens of microns. The porous particle **16a** has a porous particle size **16ad** in the order of magnitude of several tens to several hundreds of microns. The porous particle size **16ad** is the largest distance between two surface points **16p** upon porous particle surface **16ae.** The porous particle **16a** can be amorphous or of a defined spatial shape, such as a cylinder, a sphere, etc., and it can be composed of materials such as thermoplastic polymers, glass, etc.

To remove any doubt, note that the manner in which the elements of the present invention are described in the illustrations can be highly detailed, however is not in any way limiting the present illustration, however is for the purpose of clarification and furthering understanding. The present invention can be implemented in embodiments that differ from the specification given with regard to the illustration, without departing from the scope of the invention as defined by the appended claims.

## Claims

1. A system for treating lice and nits (1") on a head of a patient, the system comprising: (A) a container (14") for storing a predetermined volume of active agent (15) and immersed material (16); (B) a vaporizing and circulating gas source (11) for storing vaporizing and circulating gas (12), operatively connected to the container (14"); and (C) a cap (17) for mounting over the head of the patient and operatively connected to the container (14");
**characterized in that** the container (14") is located within a capsule (20) wherein the capsule (20) comprises:
(a) an external cylinder (20a);
(b) an internal cylinder (20b) partially located within said external cylinder (20a), and
(c) a safety-catch mounted on said internal cylinder (20b) for preventing a linear movement (201) of said external cylinder (20a) along a symmetry axis (Z);
and wherein said container (14") comprises:
(i) a container cylinder (14m) having a container main wall (14a"), a container first end (14sa), and a container second end (14sb), wherein at said container first end (14sa) said container main wall (14a") has a container first internal diameter (14qa), and wherein at said container second end (14sb) said container main wall (14a") has a container second internal diameter (14qb);
(ii) a first carrier (14j) disposed on said container cylinder (14m) at said first end (14sa), partially located within said container cylinder (14m), wherein said first carrier (14j) includes:
(ii-i) a first carrier cylinder (14ja) having a first carrier cylinder exterior diameter (14jd) wherein said first carrier cylinder exterior diameter (14jd) and said container first internal diameter (14qa) have substantially the same value; and
(iii) a second carrier (14k) disposed on said container cylinder (14m) at said second end (14sb), partially located within said container cylinder (14m), wherein said second carrier (14k) includes:
(iii-i) a second carrier cylinder (14ka) having a second carrier cylinder exterior diameter (14kd) wherein said second carrier cylinder exterior diameter (14kd) and said container second internal diameter (14qb) have substantially the same value.

2. The system for treating lice and nits (1") of claim 1, wherein said external cylinder (20a) has an external cylinder first end (20ae) and an external cylinder second end (20aj) said external cylinder (20a) including:
(i) an external cylinder wall (20aa);
(ii) an external cylinder end wall (20af) disposed on said external cylinder wall (20aa) at said external cylinder first end (20ae);
(iii) an external cylinder tube (20ag) disposed on said external cylinder end wall (20af) having an external cylinder piercer (20ah) located within said external cylinder (20a) and wherein said external cylinder tube (20ag) has an external cylinder tube internal length (20ai);
(iv) at least one external cylinder window (20ab) at said external cylinder wall (20aa); and
(v) at least one external cylinder outer clip (20ak) disposed on said external cylinder wall (20a) at said external cylinder second end (20aj), wherein said external cylinder outer clip (20ak) has a shape in a range of segments of spiral coils, and wherein said external cylinder (20a) has an external cylinder internal diameter (20a1).

3. The system for treating lice and nits (1") of claim 2, wherein said internal cylinder (20b) has an internal cylinder first end (20bk) and an internal cylinder second end (20b1), said internal cylinder (20b) including:
(i) an internal cylinder wall (20ba), having an internal cylinder wall internal diameter (20bg) and an internal cylinder wall exterior diameter (20bh);
(ii) an internal cylinder outer ring (20bd) disposed on said internal cylinder wall (20ba), wherein said internal cylinder outer ring (20bd) has an internal cylinder outer ring outer diameter (20bj);
(iii) an internal cylinder base (20be) disposed on said internal cylinder outer ring (20bd);
(iv) an internal cylinder base ring (20bf) disposed on said internal cylinder base (20be) wherein said internal cylinder base ring (20bf) constitutes said internal cylinder second end (20b1), and wherein said internal cylinder base ring (20bf) has an internal cylinder base ring exterior diameter (20bi);
(v) al least two internal cylinder slots (20bc) located at said internal cylinder wall (20ba);
(vi) at least one internal cylinder hook (20bb) located between two of said internal cylinder slots (20bc); and
(vii) at least one internal cylinder hook head (20bba) wherein each one of said internal cylinder hook heads (20bba) is disposed on one of said internal cylinder hook (20bb) at said internal cylinder first end (20bk), wherein said internal cylinder outer ring (20bd) constitutes an internal cylinder outer stair (20bm) for assisting to preventing movement of container (14") into said external cylinder (20a).

4. The system for treating lice and nits (1") of claim 3, wherein said container (14") further includes:
(i) a container first outer ring (14oa) disposed on said container main wall (14a") at said container first end (14sa) said container first outer ring (14oa) havings a container first outer ring diameter (14oad);
(ii) a container second outer ring (14ob) disposed on said container main wall (14a") at said container second end (14sb) said container second outer ring (14ob) having a container second outer ring diameter (14obud); and
(iii) a container third outer ring (14oc) disposed on said container main wall (14a") having a container third outer ring diameter (14ocd),
wherein said container first outer ring diameter (14oad) and said container second outer ring diameter (14obd) and said external cylinder internal diameter (20al) have substantially the same value, and wherein said container third outer ring diameter (14ocd) and said internal cylinder wall internal diameter (20bg) have substantially the same value.

5. The system for treating lice and nits (1") of claim 4, wherein said container (14") further includes:
(iv) a container first internal stair (14ra) located within container main wall (14a") at a distance of a container first stair depth (14pa) from said container first end (14sa); and
(v) a container interior ring (14od) constituting a container second internal stair (14rb) and a container third internal stair (14rc), wherein said container second internal stair (14rb) is located within container main wall (14a") at a distance of a container second stair depth (14pb) from said container second end (14sb).

6. The system for treating lice and nits (1") of claim 5, wherein said first carrier (14j) further includes:
(ii-ii) a first carrier disc (14jb) disposed on said first carrier cylinder (14ja), wherein said first carrier disc (14jb) have a first carrier length (14jc) a first carrier interior diameter (14je) and a first carrier ring disc exterior diameter (14jh), wherein said first carrier length (14jc) is larger than said external cylinder tube internal length (20ai).

7. The system for treating lice and nits (1") of claim 6 wherein said second carrier (14k) further includes:
(iii-ii) a second carrier disc (14kb) disposed on said second carrier cylinder (14a), wherein said second carrier disc (14kb) has a second carrier length (14kc) and a second carrier interior diameter (14ke).

8. The system for treating lice and nits (1") of claim 7, wherein said container (14") further includes:
(iv) a filter (141") disposed on said first carrier (14j) located at a range of a container first stair depth (14pa) from said container first end (14sa): and
(v) a sealing disc (14e") disposed on said first carrier disc (14jb);
(vi) a filter (141") disposed on said second carrier (14k) located at a range of container second stair depth (14pb) from said container second end (14sb); and
(vii) a sealing disc (14e") disposed on said second carrier disc (14kb).

9. The system for treating lice and nits (1") of claim 8, wherein said capsule (20) comprises:
(d) two sealing rings (20c) wherein each one of said sealing rings (20c) is disposed on a different one of said sealing discs (14e").

10. The system for treating lice and nits (1") of claim 9 wherein said a safetycatch (21) includes:
(i) a safety-catch handle (21 a); and
(ii) two safety-catch stopper arms (21b) wherein each one of said safety-catch stopper arms (21b) is disposed on said safety-catch handle (21 a), wherein each one of said safety-catch stopper arms (21b) has a safety-catch stopper arm width (21c) and wherein said safety-catch stopper arm width (21 c) has substantially the same value as the distance of movement the safety-catch (21) covers between the external cylinder (20a) and the internal cylinder (20b).

11. The system for treating lice and nits (1") of claim 10 further comprising:
(D) an adapter (18) operatively connected to said vaporizing and circulating gas source (11), wherein said capsule (20) is partially inserted into said adapter (18), said adapter (18) including:
(i) an adapter base (18e);
(ii) an adapter outer cylinder (18d) disposed on said adapter base (18e);
(iii) at least one adapter track (18f) having an adapter track stopper (18g), wherein said at least one adapter track (18f) has a shape in a range of segments of spiral coils wherein said shape in a range of segments of spiral coils of said at least one adapter track (18f) and said shape in a range of segments of spiral coils of said at least one external cylinder outer clip (20ak) having substantially an identical pitch value; and
(iv) an adapter tube (18c) disposed on said adapter base (18e) having an adapter piercer (18b) located within said adapter outer cylinder (18d).

12. The system for treating lice and nits (1") of claim 11 further **characterized in that** said immersed material (16) contains a plurality of porous particles (16a).

13. The system for treating lice and nits (1") of claim 11 further **characterized in that** said cap (17) includes:
(i) a distributor (17a); and
(ii) at least two injection tubes (17b), wherein each one of said injection tubes (17b) is operatively connected to said distributor (17a); wherein each one of said injection tubes (17b) is disposed on an interior side of said cap (17c), and wherein each one of said injection tubes (17b) has a plurality of flow openings (17f).

14. A method using a system according to claim 12 for treating lice and nits on a head of a patient comprising the stages of: (a) mounting a cap (17) over the head of the patient, wherein the cap (17) is operatively connected to a container (14"), the container (14") storing a predetermined volume of active agent (15) and porous particles (16a) and containing sealing discs (14e"); (b) connecting the container (14") to a vaporizing and circulating gas source (11) containing vaporizing and circulating gas (12); (c) delivering, the predetermined volume of active agent (15) for treatment of lice infestation wherein said active agent (15) contains acidic active ingredient component; (d) waiting at least a predetermined minimal duration time; and (e) removing said cap (17) from the head after said predetermined minimal duration time, **characterized in that** the stage of delivering, a predetermined volume of active agent (15) for treatment of lice infestation includes the sub-stages of:
(i) holding an external cylinder (20a) of a capsule (20), with said capsule (20) containing the container (14"), which contains said active agent (15) and porous particles (16a), the external cylinder (20a) having an external cylinder first end (20ae) and an external cylinder second end (20aj);
(ii) removing a safety-catch (21) from an internal cylinder (20b) of said capsule 20 wherein the internal cylinder (20b) is partially located within said external cylinder (20a)
(iii) partially inserting said internal cylinder (20b) into an adapter (18), which includes an adapter tube (18c);
(iv) after a performing a linear movement of the external cylinder (20a), the external cylinder second end (20aj) is halted within said adapter (18), and continuing pressing of said external cylinder (20a) in linear movement toward said adapter (18) and rotating said external cylinder (20a) while adapter tracks (18f) apply forces to an external cylinder outer clips (20ak) until said linear and rotational movement between said external cylinder (20a) and said adapter (18) are stopped and are locked together by forces of friction, as a result of a contact generated between said external cylinder outer clip (20ak) and adapter track stoppers (18g); and
(v) in the course of said linear movement of said external cylinder (20a) with regard to said internal cylinder (20b), perforating two sealing discs (14e") for enabling flow from and through said container (14").

15. The method for treating lice and nits on a head of a patient of claim 14 wherein said vaporizing and circulating gas (12) contains solvent material.

## Patentansprüche

1. System zum Behandeln von Läusen und Nissen (1") auf dem Kopf eines Patienten, wobei das System Folgendes umfasst: (A) einen Behälter (14") zum Speichern eines vorbestimmten Volumens eines Wirkstoffs (15) und von eingetauchtem Material (16), (B) eine Verdampfungs- und Umlaufgasquelle (11) zum Speichern von Verdampfungs- und Umlaufgas (12), die wirksam mit dem Behälter (14") verbunden ist, und (C) eine Haube (17) zum Anbringen über dem Kopf des Patienten und wirksam mit dem Behälter (14") verbunden,
**dadurch gekennzeichnet, dass** der Behälter (14") innerhalb einer Kapsel (20) angeordnet ist, wobei die Kapsel (20) Folgendes umfasst:
(a) einen Außenzylinder (20a),
(b) einen Innenzylinder (20b), der teilweise innerhalb des Außenzylinders (20a) angeordnet ist, und
(c) eine Sperrklinke, die an dem Innenzylinder (20b) angebracht ist, um eine lineare Bewegung (201) des Außenzylinders (20a) entlang einer Symmetrieachse (Z) zu verhindern,
und wobei der Behälter (14") Folgendes umfasst:
(i) einen Behälterzylinder (14m), der eine Behälterhauptwand (14a"), ein erstes Behälterende (14sa) und ein zweites Behälterende (14sb) hat, wobei die Behälterhauptwand (14a") an dem ersten Behälterende (14sa) einen ersten Behälter-Innendurchmesser (14qa) hat und wobei die Behälterhauptwand (14a") an dem zweiten Behälterende (14sb) einen zweiten Behälter-Innendurchmesser (14qb) hat,
(ii) einen ersten Träger (14j), der an dem Behälterzylinder (14m) an dem ersten Ende (14sa) angeordnet ist, teilweise innerhalb des Behälterzylinders (14m) angeordnet, wobei der erste Träger (14j) Folgendes einschließt:
(ii-i) einen ersten Trägerzylinder (14ja), der einen ersten Trägerzylinder-Außendurchmesser (14jd) hat, wobei der erste Trägerzylinder-Außendurchmesser (14jd) und der erste Behälter-Innendurchmesser (14qa) im Wesentlichen den gleichen Wert haben, und
(iii) einen zweiten Träger (14k), der an dem Behälterzylinder (14m) an dem zweiten Ende (14sb) angeordnet ist, teilweise innerhalb des Behälterzylinders (14m) angeordnet, wobei der zweite Träger (14k) Folgendes einschließt:
(iii-i) einen zweiten Trägerzylinder (14ka), der einen zweiten Trägerzylinder-Außendurchmesser (14kd) hat, wobei der zweite Trägerzylinder-Außendurchmesser (14kd) und der zweite Behälter-Innendurchmesser (14qb) im Wesentlichen den gleichen Wert haben.

2. System zum Behandeln von Läusen und Nissen (1") nach Anspruch 1, wobei der Außenzylinder (20a) ein erstes Außenzylinderende (20ae) und ein zweites Außenzylinderende (20aj) hat, wobei der Außenzylinder (20a) Folgendes einschließt:
(i) eine Außenzylinderwand (20aa),
(ii) eine Außenzylinder-Stirnwand (20af), die an dem ersten Außenzylinderende (20ae) an der Außenzylinderwand (20aa) angeordnet ist,
(iii) eine Außenzylinderröhre (20ag), die an der Außenzylinder-Stirnwand (20af) angeordnet ist, wobei sie einen Außenzylinderdorn (20ah) hat, der innerhalb des Außenzylinders (20a) angeordnet ist, und wobei die Außenzylinderröhre (20ag) eine Außenzylinderröhren-Innenlänge (20ai) hat,
(iv) wenigstens ein Außenzylinderfenster (20ab) an der Außenzylinderwand (20aa) und
(v) wenigstens eine äußere Außenzylinderlasche (20ak), die an dem zweiten Außenzylinderende (20aj) an der Außenzylinderwand (20aa) angeordnet ist, wobei die äußere Außenzylinderlasche (20ak) eine Form in einem Bereich von Segmenten von Spiralwindungen hat, und wobei der Außenzylinder (20a) einen Außenzylinder-Innendurchmesser (20a1) hat.

3. System zum Behandeln von Läusen und Nissen (1") nach Anspruch 2, wobei der Innenzylinder (20b) ein erstes Innenzylinderende (20bk) und ein zweites Innenzylinderende (20bl) hat, wobei das Innenzylinder (20b) Folgendes einschließt:
(i) eine Innenzylinderwand (20ba), die einen Innenzylinderwand-Innendurchmesser (20bg) und einen Innenzylinderwand-Außendurchmesser (20bh) hat,
(ii) einen Innenzylinder-Außenring (20bd), der an der Innenzylinderwand (20ba) angeordnet ist, wobei der Innenzylinder-Außenring (20bd) einen Innenzylinderaußenring-Außendurchmesser (20bj) hat,
(iii) eine Innenzylinderbasis (20be), die an dem Innenzylinder-Außenring (20bd) angeordnet ist,
(iv) einen Innenzylinder-Basisring (20bf), der an der Innenzylinderbasis (20be) angeordnet ist, wobei der Innenzylinder-Basisring (20bf) das zweite Innenzylinderende (20bl) darstellt, und wobei der Innenzylinder-Basisring (20bf) einen Innenzylinderbasisring-Außendurchmesser (20bi) hat,
(v) wenigstens zwei Innenzylinderschlitze (20bc), die an der Innenzylinderwand (20ba) angeordnet sind,
(vi) wenigstens einen Innenzylinderhaken (20bb), der zwischen zwei der Innenzylinderschlitze (20bc) angeordnet ist, und
(vii) wenigstens einen Innenzylinder-Hakenkopf (20bba), wobei ein jeder der Innenzylinder-Hakenköpfe (20bba) an einem von den Innenzylinderhaken (20bb) an dem ersten Innenzylinderende (20bk) angeordnet ist, wobei der Innenzylinder-Außenring (20bd) eine Innenzylinder-Außenstufe (20bm) darstellt, um dazu beizutragen, eine Bewegung des Behälters (14") in den Außenzylinder (20a) zu verhindern.

4. System zum Behandeln von Läusen und Nissen (1") nach Anspruch 3, wobei der Behälter (14") ferner Folgendes einschließt:
(i) einen ersten Behälteraußenring (14oa), der an der Behälterhauptwand (14a") an dem ersten Behälterende (14sa) angeordnet ist, wobei der erste Behälteraußenring (14ca) einen ersten Behälteraußenring-Durchmesser (14bad) hat,
(ii) einen zweiten Behälteraußenring (14ob), der an der Behälterhauptwand (14a") an dem zweiten Behälterende (14sb) angeordnet ist, wobei der zweite Behälteraußenring (14ob) einen zweiten Behälteraußenring-Durchmesser (14obd) hat, und
(iii) einen dritten Behälteraußenring (14oc), der an der Behälterhauptwand (14a") angeordnet ist, wobei er einen dritten Behälteraußenring-Durchmesser (14ocd) hat,
wobei der erste Behälteraußenring-Durchmesser (14oad) und der zweite Behälteraußenring-Durchmesser (14obd) und der Außenzylinder-Innendurchmesser (20a1) im Wesentlichen den gleichen Wert haben und wobei der dritte Behälteraußenring-Durchmesser (14ocd) und der Innenzylinderwand-Innendurchmesser (20bg) im Wesentlichen den gleichen Wert haben.

5. System zum Behandeln von Läusen und Nissen (1") nach Anspruch 4, wobei der Behälter (14") ferner Folgendes einschließt:
(iv) eine erste Behälterinnenstufe (14ra), die innerhalb der Behälterhauptwand (14a") in einer Entfernung einer ersten Behälterstufentiefe (14pa) von dem ersten Behälterende (14sa) angeordnet ist, und
(v) einen Behälterinnenring (14od), der eine zweite Behälterinnenstufe (14rb) und eine dritte Behälterinnenstufe (14rc) darstellt, wobei die zweite Behälterinnenstufe (14rb) innerhalb der Behälterhauptwand (14a") in einer Entfernung einer zweiten Behälterstufentiefe (14pb) von dem zweiten Behälterende (14sb) angeordnet ist.

6. System zum Behandeln von Läusen und Nissen (1") nach Anspruch 5, wobei der erste Träger (14j) ferner Folgendes einschließt:
(ii-ii) eine erste Trägerscheibe (14jb), die an dem ersten Trägerzylinder (14ja) angeordnet ist, wobei die erste Trägerscheibe (14jb) eine erste Trägerlänge (14jc), einen ersten Trägerinnendurchmesser (14ja) und einen ersten Trägerringscheiben-Außendurchmesser (14jh) hat, wobei die erste Trägerlänge (14jc) größer ist als die Außenzylinderröhren-Innenlänge (20ai).

7. System zum Behandeln von Läusen und Nissen (1") nach Anspruch 6, wobei der zweite Träger (14k) ferner Folgendes einschließt:
(iii-ii) eine zweite Trägerscheibe (14kb), die an dem zweiten Trägerzylinder (14ka) angeordnet ist, wobei die zweite Trägerscheibe (14kb) eine zweite Trägerlänge (14kc) und einen zweiten Trägerinnendurchmesser (14ke) hat.

8. System zum Behandeln von Läusen und Nissen (1") nach Anspruch 7, wobei der Behälter (14") ferner Folgendes einschließt:
(iv) einen Filter (141"), der an dem ersten Träger (14j) angeordnet ist, positioniert in einer Reichweite einer ersten Behälterstufentiefe (14pa) von dem ersten Behälterende (14sa), und
(v) eine Dichtungsscheibe (14e"), die an der ersten Trägerscheibe (14jb) angeordnet ist,
(vi) einen Filter (141"), der an dem zweiten Träger (14k) angeordnet ist, positioniert in einer Reichweite einer zweiten Behälterstufentiefe (14pb) von dem zweiten Behälterende (14sb), und
(vii) eine Dichtungsscheibe (14e"), die an der zweiten Trägerscheibe (14kb) angeordnet ist.

9. System zum Behandeln von Läusen und Nissen (1") nach Anspruch 8, wobei die Kapsel (20) Folgendes umfasst:
(d) zwei Dichtungsringe (20c), wobei ein jeder der Dichtungsringe (20c) an einer anderen der Dichtungsscheiben (14e") angeordnet ist.

10. System zum Behandeln von Läusen und Nissen (1") nach Anspruch 9, wobei eine Sperrklinke (21) Folgendes einschließt:
(i) einen Sperrklinkengriff (21a) und
(ii) zwei Sperrklinken-Anschlagarme (21b), wobei ein jeder der Sperrklinken-Anschlagarme (21b) an dem Sperrklinkengriff (21a) angeordnet ist, wobei ein jeder der Sperrklinken-Anschlagarme (21b) eine Sperrklinkenanschlagarm-Breite (21c) hat und wobei die Sperrklinkenanschlagarm-Breite (21c) im Wesentlichen den gleichen Wert hat wie die Bewegungsstrecke, welche die Sperrklinke (21) zwischen dem Außenzylinder (20a) und dem Innenzylinder (20b) abdeckt.

11. System zum Behandeln von Läusen und Nissen (1") nach Anspruch 10, das ferner Folgendes umfasst:
(D) einen Adapter (18), der wirksam mit der Verdampfungs- und Umlaufgasquelle (11) verbunden ist, wobei die Kapsel (20) teilweise in den Adapter (18) eingesetzt ist, wobei der Adapter (18) Folgendes einschließt:
(i) eine Adapterbasis (18e),
(ii) einen Adapteraußenzylinder (18d), der an der Adapterbasis (18e) angeordnet ist,
(iii) wenigstens eine Adapterbahn (18f), die einen Adapterbahnanschlag (18g) hat, wobei die wenigstens eine Adapterbahn (18f) eine Form in einem Bereich von Segmenten von Spiralwindungen hat, wobei die Form in einem Bereich von Segmenten von Spiralwindungen der wenigstens einen Adapterbahn (18f) und die Form in einem Bereich von Segmenten von Spiralwindungen der wenigstens einen äußeren Außenzylinderlasche (20ak) im Wesentlichen einen identischen Steigungswert haben, und
(iv) eine Adapterröhre (18c), die an der Adapterbasis (18e) angeordnet ist, wobei sie einen Adapterdorn (18b) hat, der innerhalb des Adapteraußenzylinders (18d) angeordnet ist.

12. System zum Behandeln von Läusen und Nissen (1") nach Anspruch 11, ferner **dadurch gekennzeichnet, dass** das eingetauchte Material (16) mehrere poröse Teilchen (16a) enthält.

13. System zum Behandeln von Läusen und Nissen (1") nach Anspruch 11, ferner **dadurch gekennzeichnet, dass** die Haube (17) Folgendes einschließt:
(i) einen Verteiler (17a) und
(ii) wenigstens zwei Einblasröhren (17b), wobei eine jede der Einblasröhren (17b) wirksam mit dem Verteiler (17a) verbunden ist, wobei eine jede der Einblasröhren (17b) auf einer Innenseite (17c) der Haube angeordnet ist und wobei eine jede der Einblasröhren (17b) mehrere Strömungsöffnungen (17f) hat.

14. Verfahren unter Verwendung eines Systems nach Anspruch 12 zum Behandeln von Läusen und Nissen (1") auf dem Kopf eines Patienten, das die folgenden Phasen umfasst:
(a) das Anbringen einer Haube (17) über dem Kopf des Patienten, wobei die Haube (17) wirksam mit einem Behälter (14") verbunden ist, wobei der Behälter (14") ein vorbestimmtes Volumen eines Wirkstoffs (15) und von porösen Teilchen (16a) speichert und Dichtungsscheiben (14e") enthält, (b) das Verbinden des Behälters (14") mit einer Verdampfungs- und Umlaufgasquelle (11), die ein Verdampfungs- und Umlaufgas (12) enthält, (c) das Zuführen des vorbestimmten Volumens des Wirkstoffs (15) zur Behandlung eines Läusebefalls, wobei der Wirkstoff (15) säurehaltige Wirkstoffbestandteile enthält, (d) das Abwarten wenigstens einer vorbestimmten minimalen Zeitdauer und (e) das Entfernen der Haube (17) von dem Kopf nach der vorbestimmten minimalen Zeitdauer, **dadurch gekennzeichnet, dass** die Phase des Zuführens eines vorbestimmten Volumens eines Wirkstoffs (15) zur Behandlung eines Läusebefalls die folgenden Unterphasen einschließt:
(i) das Halten eines Außenzylinders (20a) einer Kapsel (20), wobei die Kapsel (20) den Behälter (14") enthält, der den Wirkstoff (15) und die porösen Teilchen (16a) enthält, wobei der Außenzylinder (20a) ein erstes Außenzylinderende (20ae) und ein zweites Außenzylinderende (20aj) hat,
(ii) das Entfernen einer Sperrklinke (21) von einem Innenzylinder (20b) der Kapsel (20), wobei der Innenzylinder (20b) teilweise innerhalb des Außenzylinders (20a) angeordnet ist,
(iii) das teilweise Einsetzen des Innenzylinders (20b) in einen Adapter (18), der eine Adapterröhre (18c) einschließt,
(iv) nach einer Durchführung einer linearen Bewegung des Außenzylinders (20a) wird das zweite Außenzylinderende (20aj) innerhalb des Adapters (18) angehalten, und ein sich fortsetzendes Drücken des Außenzylinders (20a) in einer linearen Bewegung zu dem Adapter (18) hin und ein Drehen des Außenzylinders (20a), während Adapterbahnen (18f) Kräfte auf eine äußere Außenzylinderlasche (20ak) ausüben, bis die lineare und die Drehbewegung zwischen dem Außenzylinder (20a) und dem Adapter (18) angehalten werden und, im Ergebnis einer zwischen der äußeren Außenzylinderlasche (20ak) und Adapterbahnanschlägen (18g) erzeugten Berührung, durch Reibungskräfte miteinander verriegelt werden, und
(v) im Verlauf der linearen Bewegung des Außenzylinders (20a) in Bezug auf den Innenzylinder (20b) das Perforieren von zwei Dichtungsscheiben (14e"), um ein Strömen aus dem und durch den Behälter (14") zu ermöglichen.

15. Verfahren zum Behandeln von Läusen und Nissen auf dem Kopf eines Patienten nach Anspruch 14, wobei das Verdampfungs- und Umlaufgas (12) ein Lösemittel enthält.

## Revendications

1. Système (1") pour traiter les poux et les lentes sur la tête d'un patient, le système comprenant: (A) un récipient (14") pour stocker un volume prédéterminé d'agent actif (15) et de matière immergée (16); (B) une source (11) de gaz de vaporisation et de mise en circulation pour le stockage d'un gaz de vaporisation et de mise en circulation (12), reliée fonctionnellement au récipient (14"); et (C) un bonnet (17) destiné à être mis en place sur la tête du patient et relié fonctionnellement au récipient (14");
**caractérisé par le fait que** le récipient (14") est situé à l'intérieur d'une capsule (20), dans lequel la capsule (20) comprend:
(a) un cylindre extérieur (20a);
(b) un cylindre intérieur (20b) situé en partie à l'intérieur dudit cylindre extérieur (20a) et
(c) un verrou de sûreté monté sur ledit cylindre intérieur (20b) pour empêcher un mouvement linéaire (201) dudit cylindre extérieur (20a) le long d'un axe de symétrie (Z);
et dans lequel ledit récipient (14") comprend:
(i) un cylindre de récipient (14m) possédant une paroi principale de récipient (14a"), une première extrémité de récipient (14sa) et une seconde extrémité de récipient (14sb), dans lequel, au niveau de ladite première extrémité de récipient (14sa), ladite paroi principale de récipient (14a") a un premier diamètre intérieur (14qa) de récipient et dans lequel, au niveau de ladite seconde extrémité de récipient (14sb), ladite paroi principale de récipient (14a") a un second diamètre intérieur (14qb) de récipient;
(ii) un premier support (14j) disposé sur ledit cylindre de récipient (14m) au niveau de ladite première extrémité (14sa), en partie à l'intérieur dudit cylindre de récipient (14m), dans lequel ledit premier support (14j) comprend:
(ii-i) un cylindre de premier support (14ja) ayant un diamètre extérieur (14jd) de cylindre de premier support, dans lequel ledit diamètre extérieur (14jd) de cylindre de premier support et ledit premier diamètre intérieur (14qa) de récipient sont essentiellement égaux; et
(iii) un second support (14k) disposé sur ledit cylindre de récipient (14m) au niveau de ladite seconde extrémité (14sb), en partie à l'intérieur dudit cylindre de récipient (14m), dans lequel ledit second support (14k) comprend:
(iii-i) un cylindre de second support (14ka) ayant un diamètre extérieur (14kd) de cylindre de second support, dans lequel ledit diamètre extérieur (14kd) de cylindre de second support et ledit second diamètre intérieur (14qb) de récipient sont essentiellement égaux.

2. Système (1") pour traiter les poux et les lentes selon la revendication 1, dans lequel ledit cylindre extérieur (20a) comporte une première extrémité de cylindre extérieur (20ae) et une seconde extrémité de cylindre extérieur (20aj), ledit cylindre extérieur (20a) comprenant:
(i) une paroi de cylindre extérieur (20aa);
(ii) une paroi d'extrémité de cylindre extérieur (20af) disposée sur ladite paroi de cylindre extérieur (20aa) au niveau de ladite première extrémité de cylindre extérieur (20ae);
(iii) un tube de cylindre extérieur (20ag) disposé sur ladite paroi d'extrémité de cylindre extérieur (20af), pourvu d'un poinçon de cylindre extérieur (20ah) situé à l'intérieur dudit cylindre extérieur (20a), et dans lequel ledit tube de cylindre extérieur (20ag) a une longueur intérieure (20ai) de tube de cylindre extérieur;
(iv) au moins une fenêtre de cylindre extérieur (20ab) au niveau de ladite paroi de cylindre extérieur (20aa); et
(v) au moins un élément de retenue externe de cylindre extérieur (20ak) disposé sur ladite paroi de cylindre extérieur (20aa) au niveau de ladite seconde extrémité de cylindre extérieur (20aj), dans lequel ledit élément de retenue externe de cylindre extérieur (20ak) a une forme choisie parmi des segments de spires, et dans lequel ledit cylindre extérieur (20a) a un diamètre intérieur (20a1) de cylindre extérieur.

3. Système (1") pour traiter les poux et les lentes selon la revendication 2, dans lequel ledit cylindre intérieur (20b) comporte une première extrémité de cylindre intérieur (20bk) et une seconde extrémité de cylindre intérieur (20bl), ledit cylindre intérieur (20b) comprenant:
(i) une paroi de cylindre intérieur (20ba), ayant un diamètre intérieur (20bg) de paroi de cylindre intérieur et un diamètre extérieur (20bh) de paroi de cylindre intérieur;
(ii) une bague externe de cylindre intérieur (20bd) disposée sur ladite paroi de cylindre intérieur (20ba), dans lequel ladite bague externe de cylindre intérieur (20bd) a un diamètre extérieur (20bj) de bague externe de cylindre intérieur;
(iii) une base de cylindre intérieur (20be) disposée sur ladite bague externe de cylindre intérieur (20bd);
(iv) une bague de base de cylindre intérieur (20bf) disposée sur ladite base de cylindre intérieur (20be), dans lequel ladite bague de base de cylindre intérieur (20bf) constitue ladite seconde extrémité de cylindre intérieur (20bl), et dans lequel ladite bague de base de cylindre intérieur (20bf) a un diamètre extérieur (20bi) de bague de base de cylindre intérieur;
(v) au moins deux fentes de cylindre intérieur (20bc) situées au niveau de ladite paroi de cylindre intérieur (20ba);
(vi) au moins un crochet de cylindre intérieur (20bb) situé entre deux desdites fentes de cylindre intérieur (20bc); et
(vii) au moins une tête de crochet de cylindre intérieur (20bba), dans lequel chacune desdites têtes de crochet de cylindre intérieur (20bba) est disposée sur l'un desdits crochets de cylindre intérieur (20bb) au niveau de ladite première extrémité de cylindre intérieur (20bk), dans lequel ladite bague externe de cylindre intérieur (20bd) constitue un gradin externe de cylindre intérieur (20bm) qui contribue à empêcher un mouvement du récipient (14") dans ledit cylindre extérieur (20a).

4. Système (1") pour traiter les poux et les lentes selon la revendication 3, dans lequel ledit récipient (14") comprend, en outre:
(i) une première bague externe de récipient (14oa) disposée sur ladite paroi principale de récipient (14a") au niveau de ladite première extrémité de récipient (14sa), ladite première bague externe de récipient (14oa) ayant un diamètre (14oad) de première bague externe;
(ii) une deuxième bague externe de récipient (14ob) disposée sur ladite paroi principale de récipient (14a") au niveau de ladite seconde extrémité de récipient (14sb), ladite deuxième bague externe de récipient (14ob) ayant un diamètre (14obd) de deuxième bague externe de récipient; et
(iii) une troisième bague externe de récipient (14oc) disposée sur ladite paroi principale de récipient (14a"), ayant un diamètre (14ocd) de troisième bague externe de récipient,
dans lequel ledit diamètre (14oad) de première bague externe de récipient et ledit diamètre (14obd) de deuxième bague externe de récipient et ledit diamètre intérieur (20a1) de cylindre extérieur sont sensiblement égaux, et dans lequel ledit diamètre (14ocd) de troisième bague externe de récipient et ledit diamètre intérieur (20bg) de paroi de cylindre intérieur sont sensiblement égaux.

5. Système (1") pour traiter les poux et les lentes selon la revendication 4, dans lequel ledit récipient (14") comprend, en outre:
(iv) un premier gradin interne de récipient (14ra) situé à l'intérieur de la paroi principale de récipient (14a") à une distance de ladite première extrémité de récipient (14sa) correspondant à une première profondeur de gradin de récipient (14pa); et
(v) une bague interne de récipient (14od) constituant un deuxième gradin interne de récipient (14rb) et un troisième gradin interne de récipient (14rc), dans lequel ledit deuxième gradin interne de récipient (14rb) est situé à l'intérieur de la paroi principale de récipient (14a") à une distance de ladite seconde extrémité de récipient (14sb) correspondant à une seconde profondeur de gradin de récipient (14pb).

6. Système (1") pour traiter les poux et les lentes selon la revendication 5, dans lequel ledit premier support (14j) comprend, en outre:
(ii-ii) un disque de premier support (14jb) disposé sur ledit cylindre de premier support (14ja), dans lequel ledit disque de premier support (14jb) a une longueur (14jc) de premier support, un diamètre intérieur (14je) de premier support et un diamètre extérieur (14jh) de disque de bague de premier support, dans lequel ladite longueur (14jc) de premier support est supérieure à ladite longueur intérieure (20ai) de tube de cylindre extérieur.

7. Système (1") pour traiter les poux et les lentes selon la revendication 6, dans lequel ledit second support (14k) comprend, en outre:
(iii-ii) un disque de second support (14kb) disposé sur ledit cylindre de second support (14ka), dans lequel ledit disque de second support (14kb) a une longueur (14kc) de second support et un diamètre intérieur (14ke) de second support.

8. Système (1") pour traiter les poux et les lentes selon la revendication 7, dans lequel ledit récipient (14") comprend, en outre:
(iv) un filtre (141") disposé sur ledit premier support (14j), à une distance de ladite première extrémité de récipient (14sa) correspondant à une première profondeur de gradin de récipient (14pa); et
(v) un disque d'étanchéité (14e") disposé sur ledit disque de premier support (14jb);
(vi) un filtre (141") disposé sur ledit second support (14k) à une distance de ladite seconde extrémité de récipient (14sb) correspondant à une profondeur de deuxième gradin de récipient (14pb); et
(vii) un disque d'étanchéité (14e") disposé sur ledit disque de second support (14kb).

9. Système (1") pour traiter les poux et les lentes selon la revendication 8, dans lequel ladite capsule (20) comprend:
(d) deux bagues d'étanchéité (20c), dans lequel chacune desdites bagues d'étanchéité (20c) est disposée sur un disque d'étanchéité (14e") différent.

10. Système (1") pour traiter les poux et les lentes selon la revendication 9, dans lequel un verrou de sûreté (21) comprend:
(i) une poignée de verrou de sûreté (21a); et
(ii) deux bras d'arrêt de verrou de sûreté (21b), dans lequel chacun desdits bras d'arrêt de verrou de sûreté (21b) est disposé sur ladite poignée de verrou de sûreté (21a), dans lequel chacun desdits bras d'arrêt de verrou de sûreté (21b) a une largeur de bras d'arrêt de verrou de sûreté (21c) et dans lequel ladite largeur de bras d'arrêt de verrou de sûreté (21c) est sensiblement égale à la distance de déplacement couverte par le verrou de sûreté (21) entre le cylindre extérieur (20a) et le cylindre intérieur (20b).

11. Système (1") pour traiter les poux et les lentes selon la revendication 10, comprenant, en outre:
(D) un adaptateur (18) relié fonctionnellement à ladite source de gaz de vaporisation et de mise en circulation (11), dans lequel ladite capsule (20) est partiellement insérée dans ledit adaptateur (18), ledit adaptateur (18) comprenant:
(i) une base d'adaptateur (18e);
(ii) un cylindre extérieur d'adaptateur (18d) disposé sur ladite base d'adaptateur (18e);
(iii) au moins une piste d'adaptateur (18f) présentant une butée de piste d'adaptateur (18g), dans lequel ladite au moins une piste d'adaptateur (18f) a une forme choisie parmi des segments de spires, dans lequel ladite forme choisie parmi des segments de spires de ladite au moins une piste d'adaptateur (18f) et ladite forme choisie parmi des segments de spires dudit au moins un élément de retenue externe de cylindre extérieur (20ak) ont sensiblement une valeur de pas identique; et
(iv) un tube d'adaptateur (18c) disposé sur ladite base d'adaptateur (18e), pourvu d'un poinçon d'adaptateur (18b) situé à l'intérieur dudit cylindre extérieur d'adaptateur (18d).

12. Système (1") pour traiter les poux et les lentes selon la revendication 11, **caractérisé, en outre, par le fait que** ladite matière immergée (16) contient une pluralité de particules poreuses (16a).

13. Système (1") pour traiter les poux et les lentes selon la revendication 11, **caractérisé, en outre, par le fait que** ledit bonnet (17) comprend:
(i) un distributeur (17a); et
(ii) au moins deux tubes d'injection (17b), dans lequel chacun desdits tubes d'injection (17b) est relié fonctionnellement audit distributeur (17a); dans lequel chacun desdits tubes d'injection (17b) est disposé sur un côté intérieur dudit bonnet (17c), et dans lequel chacun desdits tubes d'injection (17b) est pourvu d'une pluralité d'ouvertures d'écoulement (17f).

14. Procédé utilisant un système selon la revendication 12 pour le traitement des poux et des lentes sur la tête d'un patient, comprenant les étapes consistant à: (a) mettre en place un bonnet (17) sur la tête du patient, dans lequel le bonnet (17) est relié fonctionnellement à un récipient (14"), le récipient (14") stockant un volume prédéterminé d'agent actif (15) et de particules poreuses (16a) et contenant des disques d'étanchéité (14e"); (b) relier le récipient (14") à une source de gaz de vaporisation et de mise en circulation (11) contenant un gaz de vaporisation et de mise en circulation (12); (c) délivrer le volume prédéterminé d'agent actif (15) pour traiter l'infestation par des poux, dans lequel ledit agent actif (15) contient un composant acide comme ingrédient actif; (d) attendre au moins une période de temps minimale prédéterminée; et (e) retirer ledit bonnet (17) de la tête après ladite période de temps minimale prédéterminée, **caractérisé par le fait que** l'étape de distribution d'un volume prédéterminé d'agent actif (15) pour traiter l'infestation par des poux comprend les sous-étapes consistant à:
(i) tenir un cylindre extérieur (20a) d'une capsule (20), ladite capsule (20) contenant le récipient (14") qui contient lesdits agent actif (15) et particules poreuses (16a), le cylindre extérieur (20a) comportant une première extrémité de cylindre extérieur (20ae) et une seconde extrémité de cylindre extérieur (20aj);
(ii) retirer un verrou de sûreté (21) d'un cylindre intérieur (20b) de ladite capsule (20), dans lequel le cylindre intérieur (20b) est situé en partie à l'intérieur dudit cylindre extérieur (20a);
(iii) insérer partiellement ledit cylindre intérieur (20b) dans un adaptateur (18) qui inclut un tube d'adaptateur (18c);
(iv) après que le cylindre extérieur (20a) a effectué un mouvement linéaire, la seconde extrémité de cylindre extérieur (20aj) est stoppée à l'intérieur dudit adaptateur (18), et poursuivre le mouvement linéaire en pressant ledit cylindre extérieur (20a) en direction dudit adaptateur (18) et en faisant tourner ledit cylindre extérieur (20a) tandis que les pistes d'adaptateur (18f) appliquent des forces à un élément de retenue externe de cylindre extérieur (20ak) jusqu'à ce que ledit mouvement linéaire et rotatif entre ledit cylindre extérieur (20a) et ledit adaptateur (18) soit stoppé et que les deux soient verrouillés ensemble par des forces de frottement résultant du contact créé entre ledit élément de retenue externe de cylindre extérieur (20ak) et butées de pistes d'adaptateur (18g); et
(v) au cours du déroulement dudit mouvement linéaire dudit cylindre extérieur (20a) par rapport audit cylindre intérieur (20b), perforer deux disques d'étanchéité (14e") pour permettre un écoulement depuis et à travers ledit récipient (14").

15. Procédé pour traiter des poux et des lentes sur la tête d'un patient selon la revendication 14, dans lequel ledit gaz de vaporisation et de mise en circulation (12) contient un solvant.
